# EUROPEAN PATENT APPLICATION

(11) **EP 3 920 258 A1**
(43) Date of publication of application: **08.12.2021**
(21) Application number: 20748853.7
(22) Date of filing: 30.01.2020
(51) Int. Cl.: H01M 2/02, H01M 2/08, H01M 10/0562

(54) **OUTER PACKAGE MATERIAL FOR ALL-SOLID-STATE BATTERIES, AND ALL-SOLID-STATE BATTERY USING SAME**

(30) Priority: 30.01.2019 JP 2019014587
(71) Applicant: Toppan Printing Co., Ltd., Tokyo 110-0016 (JP)
(72) Inventor: MURATA Koji, Tokyo 110-0016 (JP); SUZUTA Masayoshi, Tokyo 110-0016 (JP)
(74) Representative: Hoffmann Eitle
(86) International application number: PCT/JP2020/003475
(87) International publication number: WO 2020/158873

(57) **Abstract**

A packaging material for a solid-state battery including a sulfide-based solid electrolyte is provided. The packaging material includes at least a substrate layer, a barrier layer, and a sealant layer in this order. The sealant layer includes an ionomer.

## Description

### [Technical Field]

The present disclosure relates to a solid-state battery packaging material and a solid-state battery that uses the same, and more specifically, the present disclosure pertains to a packaging material for a solid-state battery that includes a sulfide-based solid electrolyte and a solid-state battery that uses the same.

### [Background Art]

Rechargeable batteries such as lithium-ion batteries are widely used in mobile electronics and, for example, in electric vehicles and hybrid electric vehicles that use electricity as a power source. Solid-state lithium batteries that use an inorganic solid electrolyte instead of an organic solvent electrolyte have been studied as batteries that have improved safety compared with lithium-ion batteries. The solid-state lithium batteries are superior in safety to the lithium-ion batteries in that thermal runaway is unlikely to occur due to, for example, a short-circuit.

Sulfide-based solid electrolytes, among the inorganic solid electrolytes, have relatively high ionic conductivity compared with, for example, oxide-based solid electrolytes and have many advantages in achieving a solid-state battery with higher performance. Unfortunately, since solid-state batteries that use sulfide-based solid electrolytes contain sulfur, toxic hydrogen sulfide might be generated by a reaction between the sulfur and moisture that has entered the battery. Given this, there is concern that the hydrogen sulfide may leak if the battery packaging material is damaged. To prevent the leakage of the hydrogen sulfide, for example, PTLs 1 and 2 propose solid-state batteries that are provided with safety designs for collecting and detoxifying the generated hydrogen sulfide.

### [Citation List]

### [Patent Literature]

PTL 1: JP 2008-103283 A
PTL 2: JP 2008-103288 A

### [Summary of the Invention]

### [Technical Problem]

Unfortunately, the methods disclosed in PTLs 1 and 2 may significantly increase costs since the manufacture of the batteries requires a lot of time and effort. Additionally, despite the concern that hydrogen sulfide, which is corrosive, may corrode current collectors, which are copper foil or aluminum foil, leading to deterioration of the battery, no study was conducted from the perspective of inhibiting the corrosion caused by the hydrogen sulfide in the inventions disclosed in PTLs 1 and 2.

It is an object of the present disclosure to provide a packaging material for a solid-state battery including a sulfide-based solid electrolyte and a solid-state battery that uses the same. The packaging material detoxifies hydrogen sulfide if it is produced and inhibits the corrosion of current collectors.

### [Solution to Problem]

Alkali metals and alkaline earth metals are known as materials which detoxify hydrogen sulfide. The method that uses these materials may be, for example, a coating method of applying a layer including these materials. However, if the packaging material is coated with a layer including the above-mentioned material, it is difficult to heat-seal the packaging material like with a conventional laminate film. This necessitates a method such as forming a layer including the above-mentioned material to cover an electrode member in advance or around the packaging material. In forming the layer including the above-mentioned material around the packaging material, a layer including the above-mentioned material needs to be provided after drawing. This is to prevent the layer including the above-mentioned material from easily cracking or becoming detached. If these methods are employed, a lot of time and effort are required for the manufacturing of the batteries.

In the meantime, a method of dispersing an alkali metal or an alkaline earth metal in a sealant layer may also be considered. In this case, however, the resin that forms the sealant layer is very immiscible with, for example, the alkali metal. Thus, the sealant layer made of the mixed material of these is very brittle, which undesirably decreases the sealing strength.

In view of the above circumstances, the present inventors have invented, as a result of earnest studies, a packaging material that can detoxify hydrogen sulfide and has properties equivalent to those of conventional packaging materials by using an ionic polymer material such as a compound including olefin and metal ions, called an ionomer.

That is, the present disclosure provides a packaging material for a solid-state battery including a sulfide-based solid electrolyte. The packaging material includes at least a substrate layer, a barrier layer, and a sealant layer in this order. The sealant layer includes an ionomer.

According to the solid-state battery packaging material, if hydrogen sulfide is generated inside the packaging material of the solid-state battery that uses the packaging material, the ionomer in the sealant layer, which is located closer to the inside of the packaging material than the barrier layer is, detoxifies the hydrogen sulfide. This inhibits corrosion of the current collectors inside the packaging material. The ionomer can detoxify the hydrogen sulfide because metal ions forming the ionomer react with the hydrogen sulfide, and the hydrogen sulfide is converted into metal sulfides. This inhibits deterioration of the solid-state battery. Furthermore, since the ionomer detoxifies the hydrogen sulfide, even if the solid-state battery packaging material is damaged, the hydrogen sulfide is inhibited from leaking. Thus, by using the above-mentioned solid-state battery packaging material, it is possible to provide a solid-state battery with improved safety. Furthermore, the packaging material can be produced by the same method as the conventional method without requiring special steps, and since the packaging material itself has a function of detoxifying hydrogen sulfide, the solid-state battery can also be produced by the same method as the conventional method without requiring special steps.

In the solid-state battery packaging material, the ionomer may include an ethylene-based ionomer resin.

In the solid-state battery packaging material, the ionomer includes a metal ion, and the metal ion may include a zinc ion. Zinc ions have high reactivity with hydrogen sulfide and efficiently convert hydrogen sulfide to zinc sulfides. Thus, the hydrogen sulfide is more promptly and more efficiently detoxified, and corrosion of the current collectors is further inhibited.

In the solid-state battery packaging material, the sealant layer may include a mixed resin layer. The mixed resin layer includes a polypropylene-based resin and, as the ionomer, an ethylene-based ionomer resin that is immiscible with the polypropylene-based resin. The mixed resin layer may further include a compatibilizer that includes a part miscible with the polypropylene-based resin and a part miscible with the ethylene-based ionomer resin. The mixed resin layer has both heat-sealing properties and a function of detoxifying hydrogen sulfide at a high level. Since the ethylene-based ionomer is immiscible with the polypropylene-based resin, the mixed resin layer normally has a sea-island structure in which the ethylene-based ionomer is dispersed in the polypropylene-based resin. Adding the compatibilizer improves the adhesion of the sea-island interface and further improves the sealing strength after heat-sealing.

The content of the ionomer in the mixed resin layer may be 1 mass% to 40 mass% relative to the total solid content of the mixed resin layer. In this case, the packaging material achieves both the heat-sealing properties and the function of detoxifying hydrogen sulfide at a high level.

In the solid-state battery packaging material, the sealant layer may include a plurality of layers. At least one of the layers may include the ionomer, and at least one other layer of the layers may include the polypropylene-based resin. With the sealant layer configured as described above, the layer containing the ionomer exhibits the function of detoxifying hydrogen sulfide, and the layer containing the polypropylene-based resin exhibits excellent heat-sealing properties.

In the solid-state battery packaging material, one or both sides of the barrier layer may be provided with an anticorrosion treatment layer. With the anticorrosion treatment layer provided, corrosion of the barrier layer is prevented, and the adhesion between the barrier layer and the adjacent layer is improved with the anticorrosion treatment layer located therebetween.

In the solid-state battery packaging material, the anticorrosion treatment layer may include cerium oxide, 1 to 100 parts by mass of phosphoric acid or phosphate relative to 100 parts by mass of the cerium oxide, and a cationic polymer. Such a packaging material has excellent resistance to hydrogen sulfide, and the barrier layer of the packaging material is inhibited from being corroded by hydrogen sulfide. Providing the anticorrosion treatment layer facilitates maintaining the adhesion between the sealant layer and the barrier layer.

The present disclosure also provides a solid-state battery, which includes a battery element including a sulfide-based solid electrolyte, a current output terminal, which extends from the battery element, and the solid-state battery packaging material according to the present disclosure, which sandwiches the current output terminal and accommodates the battery element.

### [Advantageous Effects of the Invention]

The present disclosure provides a packaging material for a solid-state battery including a sulfide-based solid electrolyte and a solid-state battery that uses the same. The packaging material detoxifies hydrogen sulfide if it is produced and inhibits the corrosion of current collectors.

### [Brief Description of the Drawings]

Fig. 1 is a schematic cross-sectional view of a solid-state battery packaging material according to an embodiment of the present disclosure.
Fig. 2 is a schematic cross-sectional view of a solid-state battery packaging material according to an embodiment of the present disclosure.
Fig. 3 is a schematic cross-sectional view of a solid-state battery packaging material according to an embodiment of the present disclosure.
Fig. 4 is a perspective view illustrating a solid-state battery according to an embodiment of the present invention.
Fig. 5 is a schematic view illustrating a method of producing an evaluation sample of examples.
Fig. 6 is a schematic view illustrating a method of producing an evaluation sample of examples.

### [Description of Embodiments]

A preferred embodiment of the present disclosure will now be described in detail with reference to the drawings. Throughout the drawings, the same or corresponding components are denoted by the same reference signs, and repetitive description is omitted. Also, dimensional ratios in the drawings are not limited to the ratios shown in the drawings.

### [Solid-State Battery Packaging Material]

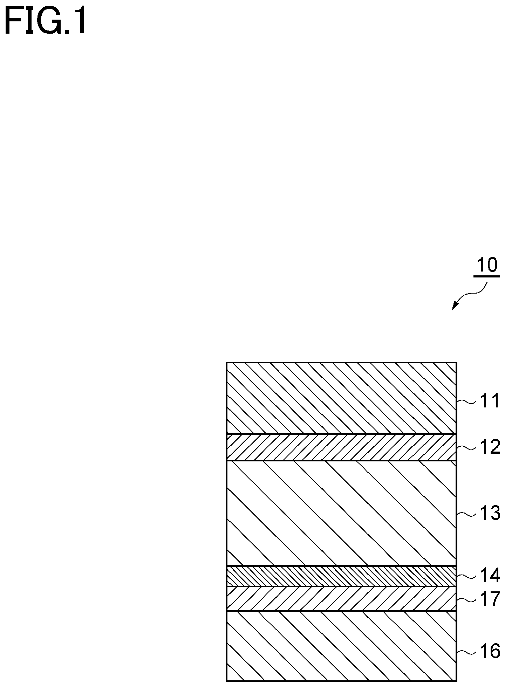

Fig. 1 is a cross-sectional view schematically showing an embodiment of a solid-state battery packaging material of the present embodiment. As shown in Fig. 1, a packaging material (solid-state battery packaging material) 10 of the present embodiment is a laminate including, in the following order, a substrate layer 11, an adhesive layer 12 (sometimes referred to as a first adhesive layer 12) formed on a surface of the substrate layer 11, a barrier layer 13 formed on a surface of the first adhesive layer 12 opposite to the surface facing the substrate layer 11, an anticorrosion treatment layer 14 formed on a surface of the barrier layer 13 opposite to the surface facing the first adhesive layer 12, an adhesive layer 17 (sometimes referred to as a second adhesive layer 17) formed on a surface of the anticorrosion treatment layer 14 opposite to the surface facing the barrier layer 13, and a sealant layer 16 formed on a surface of the second adhesive layer 17 opposite to the surface facing the anticorrosion treatment layer 14. In the packaging material 10, the substrate layer 11 is the outermost layer, and the sealant layer 16 is the innermost layer. That is, the packaging material 10 is used with the substrate layer 11 facing outward from a solid-state battery and the sealant layer 16 facing inward in the solid-state battery. Each layer will now be described.

### <Substrate layer 11>

The substrate layer 11 is provided for the purpose of imparting heat resistance in the sealing step during production of the solid-state battery and taking measures against pinholes that could develop during processing or distribution. A resin layer having insulation properties is preferably used for the substrate layer 11. Examples of the resin layer that can be used include stretched or unstretched films such as a polyester film, a polyamide film, and a polypropylene film. These films may be used as a single layer or a multilayer prepared by laminating two or more layers. A coextruded multilayer stretched film may also be used obtained by coextruding a polyethylene terephthalate film (PET) and a nylon film (Ny) using an adhesive resin, followed by stretching.

The substrate layer 11 may be provided by directly applying the substrate layer 11 on the barrier layer 13, which will be discussed below. In this case, the first adhesive layer 12, which will be discussed below, is unnecessary. A method for forming the substrate layer by coating includes applying a resin coating solution such as a urethane resin, an acrylic resin, and a polyester resin and curing by, for example, UV irradiation, high-temperature heating, and aging. The application method is not limited to particular methods and may include a variety of methods such as gravure coating, reverse coating, roll coating, and bar coating.

The substrate layer 11 preferably has a thickness of 3 µm to 40 µm, and more preferably 5 µm to 25 µm. With the substrate layer 11 having a thickness of 3 µm or more, the solid-state battery packaging material 10 tends to have improved pinhole resistance and insulation properties. A substrate layer 11 having a thickness of 40 µm or less tends to further improve deep drawing formability of the solid-state battery packaging material 10.

### <First adhesive layer 12>

The first adhesive layer 12 provides bonding between the substrate layer 11 and the barrier layer 13. The material used for forming the first adhesive layer 12 may be, for example, a polyurethane resin prepared by reacting a bifunctional or higher functional isocyanate compound with a main resin such as a polyester polyol, polyether polyol, acrylic polyol, or carbonate polyol.

These various polyols can be used alone or in combination of two or more according to the functions and performance sought in the packaging material.

Moreover, other various additives and stabilizers may be added to the polyurethane resin mentioned above depending on the performance required of the adhesive.

The thickness of the first adhesive layer 12 is not particularly limited, but from the perspective of obtaining desired adhesive strength, conformability, processability, and the like, for example, the thickness is preferably 1 µm to 10 µm, and more preferably 3 µm to 7 µm.

### <Barrier layer 13>

The barrier layer 13 has water vapor barrier properties to prevent moisture from infiltrating into the solid-state battery. Further, the barrier layer 13 has ductility and malleability for undergoing deep drawing. The barrier layer 13 may be, for example, various kinds of metal foil such as aluminum, stainless steel, and copper, or a metal vapor-deposited film, an inorganic oxide vapor-deposited film, a carbon-containing inorganic oxide vapor-deposited film, or a film on which these vapor-deposited films are provided. Examples of the film on which the vapor-deposited film is provided include an aluminum vapor-deposited film and an inorganic oxide vapor-deposited film. These can be used alone or in combination of two or more. The barrier layer 13 is preferably made of metal foil and more preferably made of aluminum foil in view of mass (specific gravity), moisture resistance, processability, and cost.

The aluminum foil may preferably be a soft aluminum foil, particularly one subjected to an annealing treatment in view of imparting a desired ductility and malleability during forming. It is more preferable to use aluminum foil containing iron for the purpose of further imparting pinhole resistance, and ductility and malleability during forming. The iron content in the aluminum foil is preferably in the range of 0.1 mass% to 9.0 mass%, and more preferably in the range of 0.5 mass% to 2.0 mass% relative to 100 mass% of aluminum foil. An iron content of 0.1 mass% or more leads to a packaging material 10 having better pinhole resistance, and ductility and malleability. An iron content of 9.0 mass% or less allows achieving the packaging material 10 having better flexibility.

The thickness of the barrier layer 13 is not particularly limited, but is preferably in the range of 9 µm to 200 µm, and more preferably 15 µm to 100 µm in terms of barrier properties, pinhole resistance, and processability.

In the case in which aluminum foil is used as the barrier layer 13, although untreated aluminum foil may be used as the aluminum foil, aluminum foil having been subjected to degreasing treatment is preferred.

It should be noted that in degreasing the aluminum foil, only one surface of the aluminum foil needs to be degreased, or both surfaces may be degreased.

### <Anticorrosion treatment layer 14>

The anticorrosion treatment layer 14 is provided to prevent the corrosion of the metal foil (metal foil layer) or the like constituting the barrier layer 13. The anticorrosion treatment layer 14 is formed by, for example, degreasing treatment, hydrothermal modification treatment, anodization treatment, chemical conversion treatment, or a combination of these treatments.

Examples of the degreasing treatment include acid degreasing and alkaline degreasing. Examples of acid degreasing include methods using an inorganic acid such as sulfuric acid, nitric acid, hydrochloric acid or hydrofluoric acid alone, or a mixture of these acids. The acid degreasing may include the use of an acid degreasing agent obtained by dissolving a fluorine-containing compound such as monosodium ammonium difluoride with the aforementioned inorganic acid. Specifically, when aluminum foil is used as the barrier layer 13, the use of this acid degreasing agent is effective in terms of corrosion resistance, for its contribution to forming a fluoride of aluminum in a passive state, in addition to obtaining the effect of degreasing aluminum. Examples of alkaline degreasing include methods using sodium hydroxide or the like.

Examples of hydrothermal modification treatment include boehmite treatment in which aluminum foil is immersed in boiling water to which triethanolamine has been added.

Examples of anodization treatment include alumite treatment.

The chemical conversion treatment may involve immersion or coating. Examples of chemical conversion treatment involving immersion include chromate treatment, zirconium treatment, titanium treatment, vanadium treatment, molybdenum treatment, calcium phosphate treatment, strontium hydroxide treatment, cerium treatment, ruthenium treatment, and various chemical conversion treatments of mixed phases thereof. Examples of chemical conversion treatment involving coating include a method of applying a coating agent having anticorrosion ability onto the barrier layer 13.

Of these anticorrosion treatments, when at least part of the anticorrosion treatment layer is formed by any of hydrothermal modification treatment, anodization treatment, and chemical conversion treatment, the degreasing treatment is preferably performed in advance. If degreased metal foil, such as annealed metal foil, is used as the barrier layer 13, the degreasing treatment is unnecessary in forming the anticorrosion treatment layer 14.

The coating agent used for the chemical conversion treatment involving coating preferably contains trivalent chromium. The coating agent may contain at least one polymer selected from the group consisting of a cationic polymer and an anionic polymer to be described later.

Of the treatments mentioned above, the hydrothermal modification treatment and the anodization treatment, in particular, dissolve the surface of aluminum foil with a treating agent and form an aluminum compound having good corrosion resistance (such as boehmite or alumite). Thus, these treatments, which form a co-continuous structure from the barrier layer 13 of aluminum foil to the anticorrosion treatment layer 14, are encompassed by the definition of the chemical conversion treatment. The anticorrosion treatment layer 14 can also be formed by only a pure coating method, which is not included in the definition of the chemical conversion treatment, as described later. Examples of such a method include a method using a rare-earth oxide sol, such as cerium oxide with a mean particle size of 100 nm or less exhibiting an anticorrosion effect (inhibitor effect) for aluminum, as a material preferable in terms of environmental aspects. The use of this method makes it possible to prevent the corrosion of the metal foil such as aluminum foil even when an ordinary coating method is used.

Examples of the rare-earth oxide sol include sols using various solvents such as an aqueous solvent, an alcohol-based solvent, a hydrocarbon-based solvent, a ketone-based solvent, an ester-based solvent, and an ether-based solvent. Of these sols, an aqueous sol is preferable.

For the rare-earth oxide sol, a dispersion stabilizer is typically used to stabilize the dispersion of the sol. The dispersion stabilizer may be an inorganic acid, such as nitric acid, hydrochloric acid, or phosphoric acid, or salts thereof, or an organic acid, such as acetic acid, malic acid, ascorbic acid, or lactic acid. Of these dispersion stabilizers, phosphoric acid, in particular, is expected to impart the packaging material 10 with features such as (1) stabilizing dispersion of the sol, (2) improving adhesion to the barrier layer 13 utilizing an aluminum chelating ability of phosphoric acid, and (3) improving cohesive force of the anticorrosion treatment layer 14 (oxide layer) by readily inducing dehydration condensation of phosphoric acid even at a low temperature.

Examples of the phosphoric acid mentioned above or salts thereof include orthophosphoric acid, pyrophosphoric acid, metaphosphoric acid, or an alkali metal salt or an ammonium salt thereof. Of these phosphoric acids or salts thereof, condensed phosphoric acid such as trimetaphosphoric acid, tetrametaphosphoric acid, hexametaphosphoric acid, or ultrametaphosphoric acid, or an alkali metal salt or an ammonium salt thereof is preferable in terms of allowing the packaging material 10 to exhibit its functions. Considering the dry film-forming properties (drying capacity and heat quantity) when the anticorrosion treatment layer 14 made of a rare-earth oxide is formed by various coating methods using the rare-earth oxide sol mentioned above, a sodium salt is more preferable from the perspective of exhibiting good dehydration condensation at a low temperature. The phosphate is preferably a water-soluble salt.

The content of phosphoric acid (or a salt thereof) is preferably 1 to 100 parts by mass relative to 100 parts by mass of the rare-earth oxide. If the content of the phosphoric acid or a salt thereof is not less than 1 part by mass relative to 100 parts by mass of the rare-earth oxide, the rare-earth oxide sol becomes more stable and the function of the packaging material 10 becomes much better. The content of the phosphoric acid or a salt thereof is more preferably not less than 5 parts by mass relative to 100 parts by mass of the rare-earth oxide. If the content of the phosphoric acid or a salt thereof is not more than 100 parts by mass relative to 100 parts by mass of the rare-earth oxide, the function of the rare-earth oxide sol is enhanced. The content of the phosphoric acid or a salt thereof is more preferably not more than 50 parts by mass relative to 100 parts by mass of the rare-earth oxide, and even more preferably not more than 20 parts by mass.

Since the anticorrosion treatment layer 14 formed of the rare-earth oxide sol is an aggregate of inorganic particles, the cohesive force of the layer itself may undesirably be lowered even after being dry-cured. Therefore, the anticorrosion treatment layer 14 in this case is preferably compounded with an anionic polymer or a cationic polymer mentioned below to supplement the cohesive force.

An example of the anionic polymer is a polymer having a carboxy group. For example, poly (meth)acrylic acid (or a salt thereof), or a copolymer containing poly (meth)acrylic acid as a main component may be used. Examples of the copolymerization component of the copolymer include an alkyl (meth)acrylate monomer (having a methyl group, an ethyl group, an n-propyl group, an i-propyl group, an n-butyl group, an i-butyl group, a t-butyl group, a 2-ethylhexyl group, a cyclohexyl group, etc. as an alkyl group); an amide group-containing monomer, such as (meth)acrylamide, N-alkyl (meth)acrylamide, or N,N-dialkyl (meth)acrylamide (having a methyl group, an ethyl group, an n-propyl group, an i-propyl group, an n-butyl group, an i-butyl group, a t-butyl group, a 2-ethylhexyl group, a cyclohexyl group, etc. as an alkyl group), N-alkoxy (meth)acrylamide, or N,N-dialkoxy (meth)acrylamide (having a methoxy group, an ethoxy group, a butoxy group, an isobutoxy group, etc. as an alkoxy group), N-methylol (meth)acrylamide, or N-phenyl (meth)acrylamide; a hydroxyl group-containing monomer, such as 2-hydroxyethyl (meth)acrylate, or 2-hydroxypropyl (meth)acrylate; a glycidyl group-containing monomer, such as glycidyl (meth)acrylate, or allyl glycidyl ether; a silane-containing monomer, such as (meth)acryloxypropyltrimethoxysilane or (meth)acryloxypropyltriethoxysilane; and an isocyanate group-containing monomer such as (meth)acryloxypropyl isocyanate.

These anionic polymers improve the stability of the anticorrosion treatment layer 14 (oxide layer) obtained using the rare-earth oxide sol. The improvement is achieved by the effect of protecting the hard and brittle oxide layer with an acrylic resin component and the effect of capturing ionic contamination (particularly sodium ions) derived from the phosphate contained in the rare-earth oxide sol (cation catcher). That is, when the anticorrosion treatment layer 14 obtained using the rare-earth oxide sol contains alkali metal ions such as sodium ions or alkaline earth metal ions in particular, the anticorrosion treatment layer 14 is likely to deteriorate starting from the site containing the ions. Therefore, the sodium ion or the like contained in the rare-earth oxide sol is fixed with the anionic polymer to improve the durability of the anticorrosion treatment layer 14.

The anticorrosion treatment layer 14 that is the combination of the anionic polymer and the rare-earth oxide sol has anticorrosion ability equivalent to that of the anticorrosion treatment layer 14 formed by applying chromate treatment to aluminum foil. The anionic polymer preferably has a structure in which a substantially water-soluble polyanionic polymer is cross-linked. Examples of the crosslinking agent used for forming this structure include a compound having, for example, an isocyanate group, a glycidyl group, a carboxy group, and an oxazoline group.

Examples of compounds having an isocyanate group include diisocyanates such as tolylene diisocyanate, xylylene diisocyanate or a hydrogenated product thereof, hexamethylene diisocyanate, 4,4'-diphenylmethane diisocyanate or a hydrogenated product thereof, and isophorone diisocyanate; polyisocyanates such as adducts of these isocyanates with polyvalent alcohols such as trimethylolpropane, biurets obtained by reacting the isocyanates with water or isocyanurates which are trimers of the isocyanates; and blocked polyisocyanates obtained by blocking these polyisocyanates with alcohols, lactams, oximes, and the like.

Examples of compounds having a glycidyl group include an epoxy compound obtained by permitting epichlorohydrin to act on glycols, such as ethylene glycol, diethylene glycol, triethylene glycol, polyethylene glycol, propylene glycol, dipropylene glycol, tripropylene glycol, polypropylene glycol, 1,4-butanediol, 1,6-hexanediol, or neopentyl glycol; and an epoxy compound obtained by permitting epichlorohydrin to act on polyhydric alcohols, such as glycerin, polyglycerin, trimethylolpropane, pentaerythritol, or sorbitol, or an epoxy compound obtained by permitting epichlorohydrin to act on dicarboxylic acids, such as phthalic acid, terephthalic acid, oxalic acid, or adipic acid.

Examples of the compound having a carboxy group include various aliphatic or aromatic dicarboxylic acids. Also, poly(meth)acrylic acid or an alkali (earth) metal salt of poly(meth)acrylic acid may be used.

Examples of compounds having an oxazoline group include low molecular weight compounds having two or more oxazoline units. Alternatively, when polymerizable monomers such as isopropenyl oxazoline are used, the compounds may be obtained by copolymerizing acrylic monomers such as (meth)acrylic acid, (meth)acrylic alkyl esters, and hydroxyalkyl (meth)acrylates.

The anionic polymer may be reacted with a silane coupling agent, or more specifically, the carboxy group of the anionic polymer may be selectively reacted with the functional group of the silane coupling agent, so that the cross-linking point has a siloxane bond. In this case, γ-glycidoxypropyltrimethoxysilane, γ-glycidoxypropyltriethoxysilane, β-(3,4-epoxycyclohexyl)ethyltrimethoxysilane, γ-chloropropylmethoxysilane, vinyltrichlorosilane, γ-mercaptopropyltrimethoxysilane, γ-aminopropyltriethoxysilane, N-β(aminoethyl)-γ-aminopropyltrimethoxysilane, γ-isocyanatepropyltriethoxysilane, or the like may be used. Of these materials, an epoxy silane, aminosilane, or isocyanate silane is preferable in terms of reactivity with an anionic polymer or a copolymer thereof in particular.

The ratio of these cross-linking agents to the anionic polymer is preferably in the range of 1 to 50 parts by mass, and more preferably 10 to 20 parts by mass relative to 100 parts by mass of the anionic polymer. When the ratio of the cross-linking agent is not less than 1 part by mass relative to 100 parts by mass of the anionic polymer, a cross-linked structure is likely to be sufficiently formed. When the ratio of the cross-linking agent is not more than 50 parts by mass relative to 100 parts by mass of the anionic polymer, the pot life of the coating solution improves.

The method used for cross-linking the anionic polymer may be, for example, a method of forming an ionic cross-link using a titanium or zirconium compound, and is not limited to the use of the cross-linking agents mentioned above.

An example of the cationic polymer is an amine-containing polymer. Examples of the amine-containing polymer include polyethyleneimine, an ionic polymer complex composed of a polymer having polyethyleneimine and a carboxylic acid, a primary amine graft acrylic resin obtained by grafting a primary amine to an acrylic backbone, polyallylamine or derivatives thereof, and aminophenol. Examples of the polyallylamine include homopolymers or copolymers of allylamine, allylamine amide sulfate, diallylamine, dimethylallylamine, and the like. These amines may be free amines or may be ones stabilized with acetic acid or hydrochloric acid. Maleic acid, sulfur dioxide, or the like may be used as a copolymer component. Furthermore, a primary amine may be used after being partially methoxylated to impart cross-linking properties thereto, or aminophenol may also be used. In particular, allylamine or derivatives thereof are preferable.

The cationic polymer is preferably used in combination with a cross-linking agent having a functional group, such as a carboxy group or a glycidyl group, capable of reacting with an amine/imine. The cross-linking agent to be used in combination with the cationic polymer may be a polymer having a carboxylic acid that forms an ionic polymer complex with polyethyleneimine. Examples of such a cross-linking agent include a polycarboxylic acid (salt) such as a polyacrylic acid or ionic salts thereof, a copolymer having a comonomer introduced thereto, and polysaccharides having a carboxy group such as carboxymethyl cellulose or ionic salts thereof.

The cationic polymer is a more preferable material from the perspective of improving adhesiveness. Since the cationic polymer is water-soluble similarly to the anionic polymer mentioned above, it is more preferable to impart water resistance by permitting it to form a cross-linked structure. The cross-linking agent that can be used for forming a cross-linked structure in the cationic polymer may include ones mentioned in the section on the anionic polymer. When a rare-earth oxide sol is used as the anticorrosion treatment layer 14, a cationic polymer may be used as a protective layer, instead of using the anionic polymer mentioned above.

In the anticorrosion treatment layer obtained through chemical conversion treatment represented by chromate treatment, a graded structure with aluminum foil is formed by treating aluminum foil using hydrofluoric acid, hydrochloric acid, nitric acid, sulfuric acid, or a chemical conversion treatment agent formulated using a salt of these acids, and allowing a chromium or non-chromium compound to act on the treated aluminum foil to form a chemical conversion treatment layer on the aluminum foil. However, the chemical conversion treatment, which uses an acid as a chemical conversion treatment agent, causes deterioration of the working environment and corrosion of the coating apparatus. In this regard, the coating-type anticorrosion treatment layer 14 mentioned above does not need to form a gradient structure relative to the barrier layer 13 of aluminum foil, unlike the anticorrosion treatment layer obtained through the chemical conversion treatment represented by a chromate treatment. Therefore, the properties of the coating agent are not restricted in terms of, for example, acidity, alkalinity, and neutrality, and a good working environment is achieved. The coating-type anticorrosion treatment layer 14 is preferable since chromate treatment using a chromium compound requires alternatives in terms of environmental health.

Based on the above, coating-type anticorrosion treatments as mentioned above can be combined as follows, for example: (1) rare-earth oxide sol alone, (2) anionic polymer alone, (3) cationic polymer alone, (4) rare-earth oxide sol + anionic polymer (laminated composite), (5) rare-earth oxide sol + cationic polymer (laminated composite), (6) rare-earth oxide sol + anionic polymer (laminated composite) / cationic polymer (multilayered), (7) rare-earth oxide sol + cationic polymer (laminated composite) / anionic polymer (multilayered). Of these combinations, (1) and (4) to (7) are preferable, and (4) to (7) are more preferable. However, the present embodiment is not limited to the above combinations. For example, an anticorrosion treatment may be selected as follows. Specifically, a cationic polymer is a highly preferable material in terms of having good adhesion to a modified polyolefin resin, as will be described in the section of the second adhesive layer or the sealant layer. Therefore, when the second adhesive layer or the sealant layer is formed of a modified polyolefin resin, the anticorrosion treatment layer may be designed so that a cationic polymer is provided to the surface thereof contacting the second adhesive layer or the sealant layer (e.g., combination (5) or (6), etc.).

The anticorrosion treatment layer 14 is not limited to the layer mentioned above. For example, the anticorrosion treatment layer 14 may be formed using a treating agent that is obtained by adding phosphoric acid and a chromium compound to a resin binder (such as aminophenol) as in a coating-type chromate based on a known technique. When this treating agent is used, the resultant layer will have both a corrosion-preventing function and adhesion. Although it is necessary to consider the stability of a coating solution, a coating agent may be prepared in advance by integrating a rare-earth oxide sol with a polycationic polymer or a polyanionic polymer, and using this coating agent, the anticorrosion treatment layer 14 may be formed that has both the corrosion prevention function and adhesion.

Regardless of having a multilayer structure or a single layer structure, mass per unit area of the anticorrosion treatment layer 14 is preferably 0.005 g/m² to 0.200 g/m², and more preferably 0.010 g/m² to 0.100 g/m². With the mass per unit area of 0.005 g/m² or more, the anticorrosion treatment layer 14 easily prevents the corrosion of the barrier layer 13. Even if the mass per unit area exceeds 0.200 g/m², there is little change in the corrosion prevention function. In contrast, when a rare earth oxide sol is used, a thick coating may cause insufficient thermal curing during drying and may possibly decrease the cohesive force. It should be noted that the thickness of the anticorrosion treatment layer 14 can be converted from its specific gravity.

From the perspective of easily maintaining the adhesion between the sealant layer 16 and the barrier layer 13, the anticorrosion treatment layer 14 may be one containing, for example, cerium oxide, 1 to 100 parts by mass of phosphoric acid or phosphate relative to 100 parts by mass of the cerium oxide, and a cationic polymer, or may be one formed by applying chemical conversion treatment to the barrier layer 13, or may be one containing a cationic polymer and formed by applying chemical conversion treatment to the barrier layer 13.

### <Second adhesive layer 17>

The second adhesive layer 17 bonds the barrier layer 13 on which the anticorrosion treatment layer 14 is formed, to the sealant layer 16. A general-purpose adhesive for bonding a barrier layer to a sealant layer may be used for the second adhesive layer 17.

If the anticorrosion treatment layer 14 has a layer containing at least one polymer selected from the group consisting of the cationic polymers and the anionic polymers mentioned above, the second adhesive layer 17 preferably contains a compound having reactivity (hereinafter also referred to as a reactive compound) with the polymer mentioned above contained in the anticorrosion treatment layer 14.

For example, if the anticorrosion treatment layer 14 contains a cationic polymer, the second adhesive layer 17 contains a compound having reactivity with the cationic polymer. If the anticorrosion treatment layer 14 contains an anionic polymer, the second adhesive layer 17 contains a compound having reactivity with the anionic polymer. If the anticorrosion treatment layer 14 contains both a cationic polymer and an anionic polymer, the second adhesive layer 17 contains a compound having reactivity with the cationic polymer and a compound having reactivity with the anionic polymer. However, the second adhesive layer 17 does not necessarily need to contain the two kinds of compounds, but may contain a compound having reactivity with both the cationic polymer and the anionic polymer. The expression having reactivity refers to forming a covalent bond with a cationic polymer or an anionic polymer. The second adhesive layer 17 may further contain an acid-modified polyolefin resin.

The compound having reactivity with the cationic polymer includes at least one compound selected from the group consisting of a polyfunctional isocyanate compound, a glycidyl compound, a compound having a carboxy group, and a compound having an oxazoline group.

The polyfunctional isocyanate compound, the glycidyl compound, the compound having a carboxy group, or the compound having an oxazoline group may be a polyfunctional isocyanate compound, a glycidyl compound, a compound having a carboxy group, a compound having an oxazoline group, or the like mentioned above as a cross-linking agent for converting the cationic polymer into a cross-linked structure. In particular, a polyfunctional isocyanate compound is preferable from the perspective of having high reactivity with a cationic polymer and being readily formed into a cross-linked structure.

The compound having reactivity with the anionic polymer may be at least one compound selected from the group consisting of a glycidyl compound and a compound having an oxazoline group. The glycidyl compound or the compound having an oxazoline group may be a glycidyl compound, a compound having an oxazoline group, or the like, mentioned above, as a cross-linking agent for converting the cationic polymer into a cross-linked structure. Of these compounds, the glycidyl compound is preferable from the perspective of having high reactivity with an anionic polymer.

If the second adhesive layer 17 contains an acid-modified polyolefin resin, it is preferable that the reactive compound is also reactive with the acidic group in the acid-modified polyolefin resin (i.e., forms a covalent bond with the acidic group). Thus, adhesion to the anticorrosion treatment layer 14 is further enhanced. In addition, the acid-modified polyolefin resin is permitted to have a cross-linked structure, which further improves solvent resistance of the packaging material 10.

The content of the reactive compound is preferably 1 to 10 equivalents relative to the acidic group in the acid-modified polyolefin resin. When the content is 1 or more equivalents, the reactive compound sufficiently reacts with the acidic group in the acid-modified polyolefin resin. If the content exceeds 10 equivalents, sufficient saturation is reached as a cross-linking reaction with the acid-modified polyolefin resin, and therefore unreacted substances may remain and thus various performances may deteriorate. Thus, for example, the content of the reactive compound is preferably 5 to 20 parts by mass (solid content ratio) relative to 100 parts by mass of the acid-modified polyolefin resin.

The acid-modified polyolefin resin is obtained by introducing an acidic group into a polyolefin resin. Examples of the acidic group include a carboxy group, a sulfonate group, and an acid anhydride group, and maleic anhydride group and a (meth)acrylic acid group are particularly preferred. The acid-modified polyolefin resin may be, for example, the same resin as one mentioned later as a modified polyolefin resin (a) used for the first sealant layer 16a.

Various additives such as a flame retardant, slip agent, antiblocking agent, antioxidant, light stabilizer, or tackifier may be added to the second adhesive layer 17.

From the perspective of reducing or preventing deterioration in lamination strength and the perspective of further reducing or preventing deterioration in insulation properties, the second adhesive layer 17 may contain, for example, acid-modified polyolefin and at least one curing agent selected from the group consisting of a polyfunctional isocyanate compound, a glycidyl compound, a compound having a carboxy group, a compound having an oxazoline group, and a carbodiimide compound. Examples of the carbodiimide compound include N,N'-di-o-tolylcarbodiimide, N,N'-diphenylcarbodiimide, N,N'-di-2,6-dimethylphenylcarbodiimide, N,N'-bis(2,6-diisopropylphenyl) carbodiimide, N,N'-dioctyldecylcarbodiimide, N-tolyl-N'-cyclohexylcarbodiimide, N,N'-di-2,2-di-t-butylphenylcarbodiimide, N-triyl-N'-phenylcarbodiimide, N,N'-di-p-nitrophenylcarbodiimide, N,N'-di-p-aminophenylcarbodiimide, N,N'-di-p-hydroxyphenylcarbodiimide, N,N'-di-cyclohexylcarbodiimide, and N,N'-di-p-tolylcarbodiimide.

The adhesive used for forming the second adhesive layer 17 may be, for example, a polyurethane-based adhesive obtained by adding polyester polyol containing hydrogenated dimer fatty acid and diol to polyisocyanate.

The thickness of the second adhesive layer 17 is not particularly limited, but from the perspective of obtaining a desired adhesive strength, processability, and the like, the thickness is preferably in the range of 1 µm to 10 µm, and more preferably 3 µm to 7 µm.

### <Sealant layer 16>

The sealant layer 16 imparts sealing properties to the packaging material 10 by heat sealing. The sealant layer 16 at least includes an ionomer.

As shown in Fig. 1, when the sealant layer is a single layer, the sealant layer is an ionomer-containing layer, which includes an ionomer.

The ionomer is an ionic polymer material having ionic cross-links, in which, for example, molecules of a base copolymer such as an ethylene-methacrylic acid copolymer and an ethylene-acrylic acid copolymer are cross-linked by metal ions. The ionomer is not particularly limited, and a known ionomer can be used.

The metal ions constituting the ionomer are not limited to particular ions and examples of the metal ions include zinc ions and sodium ions. From the perspective of more promptly and more efficiently detoxifying hydrogen sulfide, zinc ions are preferable. The metal ions can be used alone or in combination of two or more.

Examples of the base copolymer constituting the ionomer include a copolymer of α-olefin, such as ethylene and propylene, and α, β-unsaturated carboxylic acid, such as acrylic acid, methacrylic acid, and maleic acid. From the perspective of heat-sealing properties, a copolymer of ethylene or propylene and acrylic acid or methacrylic acid is preferable. The base copolymer can be used alone or in combination of two or more. In the present description, the ionomer that uses ethylene as the constituent of the base copolymer is also referred to as "ethylene-based ionomer resin".

The sealant layer 16, which is the ionomer-containing layer in this embodiment, may be a layer including only an ionomer (layer with an ionomer alone in which the content of ionomer is 100 mass%) and may also include components other than the ionomer. The sealant layer 16, which is the ionomer-containing layer in this embodiment, may be formed of, for example, a resin composition serving as a base (hereinafter also referred to as a base resin composition) and the ionomer. In the present description, the sealant layer containing the ionomer and a resin other than the ionomer (base resin composition) is referred to as a "mixed resin layer". The mixed resin layer may further contain a compatibilizer that includes a part that is miscible with the resin included in the base resin composition and a part that is miscible with the ionomer. The base resin composition mentioned above refers to the components excluding the ionomer and the compatibilizer from all the constituent components of the sealant layer 16.

When the sealant layer 16 is a mixed resin layer that contains the ionomer and the base resin composition, the content of the ionomer in the mixed resin layer may be 1 mass% or more and less than 100 mass%, or in the range of 1 mass% to 70 mass%, 1 mass% to 40 mass%, or 5 mass% to 20 mass% relative to the total solid content of the mixed resin layer. With the content of the ionomer is set within the above-mentioned range, the heat-sealing properties and the function of detoxifying hydrogen sulfide are both achieved at a high level.

The base resin composition is not particularly limited and may be polyolefin such as polyethylene and polypropylene. Examples of the base resin composition include a resin composition (hereinafter may also be referred to as resin composition α) containing 60 mass% to 95 mass% of a propylene-ethylene random copolymer (A), and 5 mass% to 40 mass% of a polyolefin-based elastomer (B) having butene-1 as a comonomer and having a melting point of 150°C or lower.

### [Resin Composition α]

As mentioned above, the resin composition α contains 60 mass% to 95 mass% propylene-ethylene random copolymer (A), and 5 mass% to 40 mass% polyolefin-based elastomer (B) including butene-1 as a comonomer, with a melting point of 150°C or less.

### (Propylene-ethylene random copolymer (A))

The propylene-ethylene random copolymer (A) excels at heat-sealing properties at a low temperature compared with a propylene-ethylene block copolymer and a propylene homopolymer and improves the sealing properties.

In the propylene-ethylene random copolymer (A), the content of ethylene is preferably in the range of 0.1 mass% to 10 mass%, more preferably 1 mass% to 7 mass%, and even more preferably 2 mass% to 5 mass%. When the content of ethylene is 0.1 mass% or more, copolymerization of ethylene sufficiently lowers the melting point, and the sealing properties are further improved. Additionally, the impact resistance is achieved, and the resistance to blushing during forming and the sealing strength are likely to be improved. The content of ethylene being 10 mass% or less prevents the melting point from being excessively lowered and is likely to more sufficiently reduce or prevent the development of excessively sealed portions. It should be noted that the content of ethylene can be calculated from the mixing ratio of monomers at the time of polymerization.

A melting point of the propylene-ethylene random copolymer (A) is preferably in the range of 120°C to 145°C, and more preferably 125°C to 140°C. A melting point being 120°C or more is likely to more sufficiently reduce or prevent the development of excessively sealed portions. A melting point of 145°C or less is likely to further improve the sealing properties.

The propylene-ethylene random copolymer (A) may be acid-modified. For example, it may be an acid-modified propylene-ethylene random copolymer obtained by graft-modifying maleic anhydride. The use of the acid-modified propylene-ethylene random copolymer can retain adhesion to a tab lead without the need of using a tab sealant.

Such a propylene-ethylene random copolymer (A) may be used alone or in combination of two or more.

In the resin composition α, the content of the component (A) is in the range of 60 mass% to 95 mass%, preferably 60 mass% to 90 mass%, and more preferably 60 mass% to 85 mass% relative to the total solid content of the resin composition α. The content of the component (A) being 60 mass% or more improves the sealing properties due to the effect of using this component (A). Moreover, the content of the component (A) being 60 mass% or more prevents the component (B) from being present excessively. Therefore, deterioration in the heat resistance of the sealant layer 16 is reduced or prevented, and the development of excessively sealed portions is reduced or prevented. The content of the component (A) being 95 mass% or less leads to the content of the component (B) being 5 mass% or more. Therefore, the effect of improving the heat-sealing strength is sufficiently exerted by the component (B).

### (Polyolefin-based elastomer (B) having butene-1 as comonomer and having melting point of 150°C or less)

A polyolefin-based elastomer (B) having butene-1 as a comonomer and having a melting point of 150°C or less contributes to improving the sealing properties and also contributes to reducing or preventing the occurrence of blushing during forming.

The polyolefin-based elastomer (B) may, but does not necessarily have to, have miscibility with the component (A). The polyolefin-based elastomer (B) preferably contains both a miscible polyolefin-based elastomer (B-1) having miscibility and an immiscible polyolefin-based elastomer (B-2) not having miscibility. Herein, when the resin constituting the component (A) is the propylene-ethylene random copolymer, having miscibility (miscible system) with the component (A) means that the elastomer is dispersed within the propylene-ethylene random copolymer resin at a dispersed phase size of 1 nm or more and less than 500 nm. Not having miscibility (immiscible system) means that the elastomer is dispersed with a dispersed phase size of 500 nm or more and less than 20 µm in the propylene-ethylene random copolymer resin constituting the component (A).

The miscible polyolefin-based elastomer (B-1) may be, for example, a propylene-butene-1 random copolymer.

The immiscible polyolefin-based elastomer (B-2) may be, for example, an ethylene-butene-1 random copolymer.

The melting point of the polyolefin-based elastomer (B) is required to be 150°C or less, but from the perspective of reducing or preventing the development of blushing during forming and excessively sealed portions, and improving the sealing properties, the melting point is preferably in the range of 60°C to 120°C, and more preferably 65°C to 90°C. The melting point being 150°C or less improves the sealing properties. The melting point being 60°C or more is advantageous from the perspective of reducing or preventing the development of excessively sealed portions.

Such polyolefin-based elastomers (B) can be used alone or in combination of two or more.

In the resin composition α, the content of the component (B) is in the range of 5 mass% to 40 mass%, preferably 10 mass% to 40 mass%, and more preferably 15 mass% to 40 mass% relative to the total solid content of the resin composition α. The content of the component (B) being 5 mass% or more sufficiently achieves the effect of improving the sealing properties. The content of the component (B) being 40 mass% or less reduces or prevents deterioration in the heat resistance of the sealant layer 16 and development of excessively sealed portions.

When the component (B) contains the miscible polyolefin-based elastomer (B-1) and the immiscible polyolefin-based elastomer (B-2), the content ratio of the two (miscible polyolefin-based elastomer (B-1) / immiscible polyolefin-based elastomer (B-2)) is preferably in the range of 0.5 to 3, and more preferably 1 to 2 in mass ratio. The content ratio being within the above ranges improves the resistance to blushing during forming and the sealing properties in a well-balanced manner.

### (Additive component)

The resin composition α may further contain components besides the components (A) and (B) mentioned above. As the components besides the components (A) and (B), for example, resins such as LDPE (low-density polyethylene) may be added to the resin composition α to improve take-up properties and processability. The content of other resin components to be added is preferably not more than 10 parts by mass when the total mass of the sealant layer 16 is taken to be 100 parts by mass. Components other than resins include, for example, a slip agent, anti-blocking agent, antioxidant, light stabilizer, and flame retardant. The content of these other components besides resins is preferably not more than 5 parts by mass when the total mass of the sealant layer 16 is taken to be 100 parts by mass.

The presence of butene-1 in the sealant layer 16 can be verified by using FT-IR (Fourier transform infrared spectrophotometer). The content of butene-1 can be verified by creating a calibration curve of the permeability or absorbance of the characteristic absorption band of the components (A) and (B) by using the resin composition α to which a known amount of an elastomer containing a known amount of butene-1 is added. Further, the content of butene-1 in each of the miscible polyolefin-based elastomer (B-1) and immiscible polyolefin-based elastomer (B-2) can also be verified by similarly conducting imaging in the characteristic absorption bands of FT-IR and conducting mapping by microscopic FT-IR (transmission method) in an absorption band caused by butene-1. Besides FT-IR, the presence and the content of butene-1 can be verified by measuring the sealant layer 16 with NMR

### [Compatibilizer]

When the sealant layer 16 is a mixed resin layer, which contains the ionomer and the base resin composition, and the ionomer is immiscible with the resin contained in the base resin composition, the mixed resin layer preferably further includes a compatibilizer that includes a part miscible with the resin contained in the base resin composition and a part miscible with the ionomer. For example, when the resin contained in the base resin composition is a polypropylene-based resin such as the propylene-ethylene random copolymer (A), and the ionomer is the ethylene-based ionomer resin that is immiscible with the polypropylene-based resin, the mixed resin layer preferably contains the compatibilizer that includes a part miscible with the polypropylene-based resin and a part miscible with the ethylene-based ionomer resin. When the ionomer is immiscible with the resin contained in the base resin compositions, the mixed resin layer has a sea-island structure in which the ionomer is dispersed in the resin contained in the base resin composition. Adding the compatibilizer to this structure increases the adhesion strength of the interface in the sea-island structure, which further improves the sealing strength after the heat sealing. The compatibilizer may be one that also improves the adhesion strength of the interface in the sea-island structure formed by the component (A) and the component (B) in the resin composition α.

Examples of the compatibilizer include a graft copolymer and a block copolymer. Examples of the graft copolymer suitable for the compatibilizer include a graft copolymer including a polyolefin main chain and a polystyrene side chain and a graft copolymer including a polyolefin main chain and a styrene-acrylonitrile copolymer side chain. For example, Modiper manufactured by NOF Corporation is suitable for the graft copolymer.

Examples of the block copolymer suitable for the compatibilizer include a block copolymer including a block constituted by a styrene unit and a block constituted by an ethylene-butylene unit, a block copolymer including a block constituted by a styrene unit, a block constituted by an ethylene-butylene unit, and a block constituted by crystalline olefin unit, a block copolymer including a block constituted by crystalline ethylene unit and a block constituted by ethylene-butylene unit, a block copolymer including a block constituted by ethylene and a block constituted by ethylene-octene 1, and a block copolymer including a block constituted by a propylene unit and a block constituted by an ethylene unit. For example, the block constituted by a propylene unit is a part miscible with a polypropylene-based resin like the propylene-ethylene random copolymer (A) mentioned above, and the block constituted by an ethylene unit is a part miscible with the ionomer such as an ethylene-based ionomer resin. For example, DYNARON manufactured by JSR Corporation, and INTUNE and INFUSE manufactured by DOW are suitable for the block copolymer.

When the mixed resin layer contains a compatibilizer, the content of the compatibilizer in the mixed resin layer is preferably 1 mass% to 40 mass%, more preferably 2 mass% to 25 mass%, even more preferably 2 to 20 mass%, and most preferably 7 to 15 mass% relative to the total solid content of the mixed resin layer. The content of the compatibilizer being 1 mass% or more is likely to improve the adhesion strength of the sea-island interface and thus is likely to improve the sealing strength. In the meantime, the content of the compatibilizer being 40 mass% or less is likely to inhibit the decrease in the cohesive strength and the sealing strength of the entire sealant layer 16.

The thickness of the sealant layer 16 is not particularly limited, but, for example, is preferably in the range of 5 µm to 100 µm, and more preferably in the range of 20 µm to 80 µm. The thickness of the sealant layer 16 may be 30 µm or less from the perspective of reducing the thickness of the packaging material. With the solid-state battery packaging material of the present embodiment having such a thin configuration, decrease in the crack resistance after heat sealing and forming is inhibited, and the solid-state battery packaging material of the present embodiment detoxifies hydrogen sulfide and inhibits the corrosion of the current collectors.

A preferred embodiment of the solid-state battery packaging material of the present embodiment has been described in detail so far. However, the present disclosure is not limited to the specific embodiment and can be modified or changed in various ways within the spirit of the present disclosure recited in the claims.

For example, Fig. 1 shows an example where the anticorrosion treatment layer 14 is formed on the surface of the barrier layer 13 facing the second adhesive layer 17. However, the anticorrosion treatment layer 14 may be formed on the surface of the barrier layer 13 facing the first adhesive layer 12, or may be formed on both surfaces of the barrier layer 13. If the anticorrosion treatment layer 14 is formed on both surfaces of the barrier layer 13, the configuration of the anticorrosion treatment layer 14 formed on the surface of the barrier layer 13 facing the first adhesive layer 12 may be the same as or different from the configuration of the anticorrosion treatment layer 14 formed on the surface of the barrier layer 13 facing the second adhesive layer 17. The barrier layer 13 may be provided with no anticorrosion treatment layer 14.

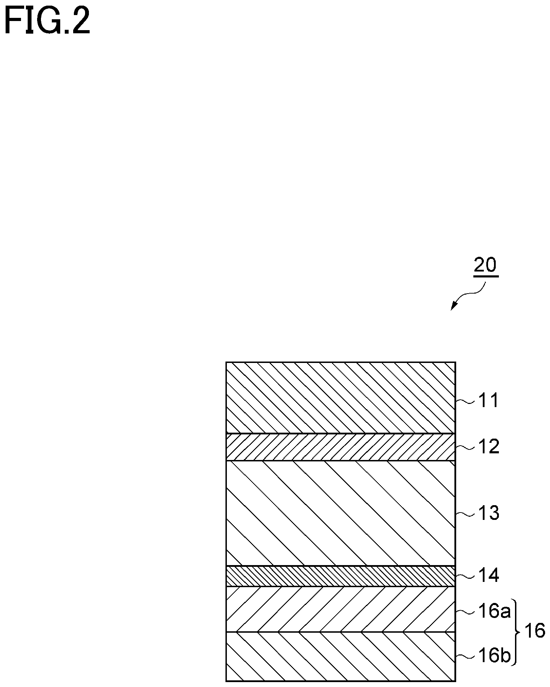

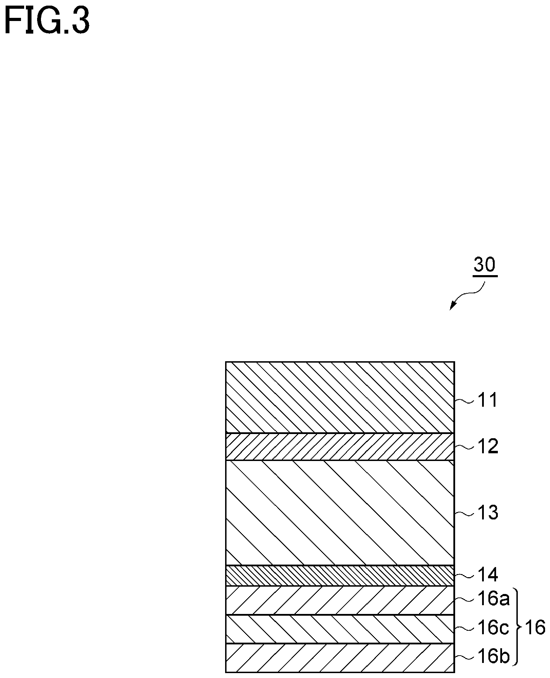

Fig. 1 shows an example where the barrier layer 13 and the sealant layer 16 are laminated using the second adhesive layer 17. However, the sealant layer 16 may be directly formed on the barrier layer 13 without the second adhesive layer 17 being interposed, as in a solid-state battery packaging material 20 shown in Fig. 2 and a solid-state battery packaging material 30 shown in Fig. 3. The solid-state battery packaging material 20 shown in Fig. 2 and the solid-state battery packaging material 30 shown in Fig. 3 can be provided with the second adhesive layer 17 between the barrier layer 13 and the sealant layer 16.

Fig. 1 shows an example where the sealant layer 16 is a single layer. However, the sealant layer 16 may be a multilayer including two or more layers as in the solid-state battery packaging material 20 shown in Fig. 2 and the solid-state battery packaging material 30 shown in Fig. 3. The layers of the multilayer forming the sealant layer 16 may be the same or different from each other. When the sealant layer 16 is a multilayer, at least one of the layers is an ionomer-containing layer, which includes an ionomer.

In the solid-state battery packaging material 20 shown in Fig. 2, the sealant layer 16 is comprised of the first sealant layer 16a and a second sealant layer 16b. The first sealant layer 16a is the outermost layer of the sealant layer, and the second sealant layer 16b is the innermost layer of the sealant layer. At least one layer selected from the group consisting of the first sealant layer 16a and the second sealant layer 16b is an ionomer-containing layer, which contains the ionomer. The ionomer-containing layer may be a layer that includes only the ionomer as described above, or may be a mixed resin layer that contains the ionomer, the base resin compositions, and, if necessary, the compatibilizer.

The second sealant layer 16b (innermost layer) can be formed using, for example, the same constituent components as those of the sealant layer 16 of the packaging material 10 described above. When the second sealant layer 16b is the ionomer-containing layer, hydrogen sulfide is more promptly and efficiently detoxified.

The second sealant layer 16b may be formed using materials excluding the ionomer and the compatibilizer from the materials forming the sealant layer 16 of the packaging material 10 described above.

The thickness of the second sealant layer 16b is not particularly limited, but specifically, for example, is preferably in the range of 5 µm to 100 µm, and may be in the range of 10 µm to 30 µm from the perspective of reducing the thickness of the packaging material.

The first sealant layer 16a (outermost layer, or layer facing the metal foil) may be formed using, for example, the same constituent components as those of the second sealant layer 16b. However, the first sealant layer 16a is preferably formed using, for example, a resin composition containing an adhesive resin composition as a main component and, as necessary, an additive component (hereinafter may also be referred to as resin composition β) instead of the resin composition α as a base resin composition taking into consideration the aluminum treatment and adhesiveness. That is, the first sealant layer 16a may be formed, for example, of the ionomer, the resin composition β, and, as necessary, the compatibilizer, or may be formed of the resin composition β alone. The first sealant layer 16a containing an adhesive resin composition is easily formed on the barrier layer without an adhesive layer being interposed. The first sealant layer 16a formed of the ionomer, the resin composition β, and, as necessary, the compatibilizer, tends to easily maintain the adhesion between the sealant layer and the barrier layer.

### [Resin Composition β (Excluding the Ionomer)]

The adhesive resin composition in the resin composition β is not particularly limited, but preferably contains a modified polyolefin resin (a) component and a macrophase-separated thermoplastic elastomer (b) component. The additive component preferably contains polypropylene having an atactic structure or a propylene-α-olefin copolymer (c) having an atactic structure. Each component will be described below.

### (Modified polyolefin resin (a))

The modified polyolefin resin (a) is preferably a resin obtained by graft-modifying an unsaturated carboxylic acid derivative component derived from any one of an unsaturated carboxylic acid, acid anhydride of an unsaturated carboxylic acid, and ester of an unsaturated carboxylic acid to a polyolefin resin.

Examples of the polyolefin resin include low-density polyethylene, medium-density polyethylene, high-density polyethylene, ethylene-α-olefin copolymers, homo-, block- or random-polypropylene, and propylene-α-olefin copolymer.

Examples of the compound used for graft-modifying these polyolefin resins include an unsaturated carboxylic acid derivative component derived from any one of an unsaturated carboxylic acid, acid anhydride of an unsaturated carboxylic acid, and ester of an unsaturated carboxylic acid.

Specifically, examples of the unsaturated carboxylic acid include acrylic acid, methacrylic acid, maleic acid, fumaric acid, itaconic acid, citraconic acid, tetrahydrophthalic acid, and bicyclo[2,2,1]hept-2-ene-5,6-dicarboxylic acid.

Examples of the acid anhydride of the unsaturated carboxylic acid include maleic anhydride, itaconic anhydride, citraconic anhydride, tetrahydrophthalic anhydride, and bicyclo[2,2,1]hept-2-ene-5,6-dicarboxylic acid anhydride.

Examples of the esters of unsaturated carboxylic acid include methyl acrylate, methyl methacrylate, ethyl methacrylate, butyl methacrylate, dimethyl maleate, monomethyl maleate, diethyl fumarate, dimethyl itaconate, diethyl citraconate, dimethyl tetrahydrophthalic anhydride, and bicyclo[2,2,1]hept-2-ene-5,6-dimethyl dicarboxylate.

The modified polyolefin resin (a) can be prepared by graft polymerization (graft modification) of 0.2 to 100 parts by mass of the unsaturated carboxylic acid derivative component mentioned above relative to 100 parts by mass of a base polyolefin resin in the presence of a radical initiator. The reaction temperature of the graft modification is preferably 50°C to 250°C, and more preferably 60°C to 200°C. The reaction time is appropriately set depending on the production method; however, in the case of a melt graft polymerization using a twin-screw extruder, for example, the reaction time is preferably within the residence time of the extruder, specifically 2 min to 30 min, and more preferably 5 min to 10 min. Graft modification can be carried out under normal pressure or pressurized conditions.

Examples of the radical initiator used for graft modification include an organic peroxide such as an alkyl peroxide, aryl peroxide, acyl peroxide, ketone peroxide, peroxy ketal, peroxy carbonate, peroxy ester, and hydroperoxide.

These organic peroxides can be appropriately selected and used depending on the conditions of the reaction temperature and the reaction time mentioned above. For example, in the case of melt graft polymerization using a twin-screw extruder, an alkyl peroxide, peroxy ketal, or peroxy ester is preferable, and specifically di-t-butyl peroxide, 2,5-dimethyl-2,5-di-t-butyl peroxy-hexyne-3, dicumyl peroxide, or the like is preferable.

The modified polyolefin resin (a) is preferably a polyolefin resin modified with maleic anhydride. For example, Admer manufactured by Mitsui Chemicals, Inc. or Modic manufactured by Mitsubishi Chemical Corporation is suitable. Such a modified polyolefin resin (a) component excels at reactivity with various metals and polymers having various functional groups, and thus imparts adhesion to the first sealant layer 16a making use of the reactivity.

### (Macrophase-separated thermoplastic elastomer (b))

The macrophase-separated thermoplastic elastomer (b) forms a macrophase-separated structure having a dispersed phase size in a range in excess of 200 nm to 50 µm or less relative to the modified polyolefin resin (a).

The adhesive resin composition containing a macrophase-separated thermoplastic elastomer (b) component releases the residual stress, which is generated during lamination of, for example, the modified polyolefin resin (a) component that may provide the main component constituting the first sealant layer 16a, and imparts viscoelastic adhesion to the first sealant layer 16a. Consequently, the packaging material 20 including the first sealant layer 16a with further improved adhesion is obtained.

The macrophase-separated thermoplastic elastomer (b) is present in the form of a sea-island structure on the modified polyolefin resin (a). If the dispersed phase size is 200 nm or less, it is difficult to improve the viscoelastic adhesion of the first sealant layer 16a. If the dispersed phase size exceeds 50 µm, since the modified polyolefin resin (a) is substantially immiscible with the macrophase-separated thermoplastic elastomer (b), the lamination suitability (processability) is decreased considerably, and the physical strength of the first sealant layer 16a easily deteriorates. Therefore, the dispersed phase size is preferably in the range of 500 nm to 10 µm.

Examples of the macrophase-separated thermoplastic elastomer (b) include a polyolefin-based thermoplastic elastomer obtained by copolymerizing ethylene and/or propylene with an α-olefin selected from 1-butene, 1-pentene, 1-hexene, 1-octene, and 4-methyl-1-pentene.

Further, commercially available products can be used as the macrophase-separated thermoplastic elastomer (b) component. For example, Tafmer manufactured by Mitsui Chemicals Inc., Zelas manufactured by Mitsubishi Chemical Corp., or Catalloy manufactured by Montell Co. is suitable.

In the resin composition β, the content of the macrophase-separated thermoplastic elastomer (b) component relative to the modified polyolefin resin (a) component is preferably in the range of 1 to 40 parts by mass, and more preferably 5 to 30 parts by mass relative to 100 parts by mass of the modified polyolefin resin (a) component. If the content of the macrophase-separated thermoplastic elastomer (b) component is less than 1 part by mass, improvement in adhesion of the first sealant layer cannot be expected. If the content of the macrophase-separated thermoplastic elastomer (b) component exceeds 40 parts by mass, processability is likely to be drastically lowered because miscibility is inherently low between the modified polyolefin resin (a) component and the macrophase-separated thermoplastic elastomer (b) component. Since the macrophase-separated thermoplastic elastomer (b) component is not a resin exhibiting adhesion, adhesion of the first sealant layer 16a to other layers such as the second sealant layer 16b and the anticorrosion treatment layer 14 is likely to deteriorate.

### (Polypropylene having atactic structure or propylene-α-olefin copolymer (c) having atactic structure)

The resin composition β preferably contains polypropylene having an atactic structure or a propylene-α-olefin copolymer having an atactic structure (hereinafter simply referred to as component (c)) as an additive component. The component (c) herein is a completely amorphous resin component.

Hereinafter, a description will be given of the effect of adding the additive component (c) to the adhesive resin composition, which is the main component in the resin composition β.

In a molten state, the component (c) is miscible with the modified polyolefin resin (a) component in the adhesive resin composition, but is discharged from the crystal during crystallization accompanying cooling, which is then uniformly dispersed around the spherulite. As a result, the component (c) does not interfere with the degree of crystallization of the modified polyolefin resin (a) component in the adhesive resin composition, which is the main component. By adding the component (c) to the resin composition β, the concentration of the modified polyolefin resin (a) component is diluted by the component (c), and crystal growth is minimized. This reduces the crystal size (spherulite size) of the adhesive component (i.e., the modified polyolefin resin (a) component) of the base resin. Moreover, the component (c) discharged outside the crystal is uniformly dispersed around the micro-spherulites of the modified polyolefin resin (a) component.

It is known that a blushing phenomenon occurs when cold-forming a packaging material. The mechanism of the blushing phenomenon will be described.
(1) The modified polyolefin resin (a) in the resin composition β is crystallized by heat treatment during thermal lamination.
(2) Since the modified polyolefin resin (a) is immiscible with the macrophase-separated thermoplastic elastomer (b), strain develops at the interface between the two due to the crystallization behavior of (1).
(3) With the application of stress during forming, cracks occur at the interface between the two resulting in the formation of voids and crazes.
(4) Light is scattered by the voids and crazes, and the blushing phenomenon occurs due to the irregular reflection of optical light.

Specifically, to prevent the blushing phenomenon, it is known to be important that the crystallization of the modified polyolefin resin (a) does not progress due to the amount of heat generated during thermal lamination (i.e., crystallization is minimized), and the adhesion between the modified polyolefin resin (a) and the macrophase-separated thermoplastic elastomer (b) is improved.

In this regard, by adding the component (c) as an additive component to the adhesive resin composition that may provide the main component of the first sealant layer 16a, the crystal size (spherulite size) of the modified polyolefin resin (a) component is reduced, and therefore flexible and strong film properties are obtained. Moreover, since the component (c) is uniformly dispersed around the modified polyolefin resin (a), stress is uniformly relieved and the development of voids and crazes is reduced or prevented. These effects are considered to alleviate the blushing phenomenon occurring on the packaging material 20 due to the stress generated at the time of forming.

As described above, the addition of the component (c) as an additive component to the adhesive resin composition that may provide the main component of the first sealant layer 16a enhances the transparency of the first sealant layer 16a and alleviates the blushing phenomenon due to the stress generated at the time of forming. Thus, blushing during forming is reduced or prevented, leading to improvement in crack resistance associated with the bending stress of the packaging material 20. Moreover, while maintaining the degree of crystallization of the modified polyolefin resin component (a), the first sealant layer 16a is imparted with flexibility, so that deterioration in the bending resistance (the crack resistance) of the packaging material 20 is reduced or prevented.

### (Propylene-α-olefin copolymer (d) having isotactic structure)

In addition to the component (c) mentioned above, the resin composition β may further contain a propylene-α-olefin copolymer having an isotactic structure (hereinafter simply referred to as component (d)) as an additive component.

Since flexibility for relieving the stress is imparted by further adding the component (d) as the additive component to the adhesive resin component, which is the main component of the resin composition β, the heat-sealing strength is improved. Further, the blushing phenomenon and bending resistance are further improved by combining the components (c) and (d) as the additive components.

In the resin composition β, the total mass of the components (a) and (b) may be, for example, 60 mass% or more and 95 mass% or less, or may be 80 mass% or more and 90 mass% or less relative to the total mass of the first sealant layer 16a.

In the resin composition β, the total mass of the components (c) and (d) is, for example, preferably 5 mass% or more and 40 mass% or less relative to the total mass of the components (a), (b), (c), and (d). If the total mass of the components (c) and (d) is less than 5 mass% relative to the total mass of the components (a), (b), (c), and (d), the effects mentioned above produced by adding an additive are unlikely to be obtained sufficiently. If the total mass of the components (c) and (d) exceeds 40 mass% relative to the total mass of the components (a), (b), (c), and (d), the adhesion of the first sealant layer 16a to other layers such as the second sealant layer 16b and the anticorrosion treatment layer 14 is likely to deteriorate. From these perspectives, in the resin composition β, the total mass of the components (a) and (b), for example, is preferably 60 mass% to 95 mass% relative to the total mass of the components (a), (b), (c), and (d).

Note that, the component (c), which is the additive component in the resin composition β, can be analyzed using, for example, nuclear magnetic resonance spectroscopy (NMR) to determine the quantity by stereoregularity assessment.

The component (d) can be analyzed using Fourier transform infrared spectroscopy (FT-IR), and the formulation ratio can be verified by creating a calibration curve using an absorber attributed to the branching of α-olefin and an absorber attributed to the characteristic absorber of the modified polyolefin resin (a).

Besides the adhesive resin composition (i.e., the modified polyolefin resin (a) component and the macrophase-separated thermoplastic elastomer (b) component) and the additive component (i.e., the components (c) and (d)), the resin composition β may contain various additives such as a flame retardant, slip agent, antiblocking agent, antioxidant, light stabilizer, and tackifier as required.

The thickness of the first sealant layer 16a is not particularly limited, but is preferably equal to or less than that of the second sealant layer 16b from the perspective of stress relaxation and moisture permeation.

In the solid-state battery packaging material 20 as well, the thickness of the sealant layer 16 (i.e., the total thickness of the first and second sealant layers 16a and 16b) may be 35 µm or less and may be 30 µm or less from the perspective of reducing the thickness of the packaging material. With the solid-state battery packaging material of the present embodiment having such a thin configuration, decrease in the crack resistance after heat sealing and forming is inhibited, and the solid-state battery packaging material of the present embodiment detoxifies hydrogen sulfide and inhibits the corrosion of the current collectors.

Fig. 2 shows an example where the sealant layer 16 is formed of two layers. However, the sealant layer 16 may be formed of three layers as in the solid-state battery packaging material 30 shown in Fig. 3. In the solid-state battery packaging material 30 shown in Fig. 3, the sealant layer 16 includes the first sealant layer 16a, the second sealant layer 16b, and a third sealant layer 16c. The first sealant layer 16a is the outermost layer (layer facing the metal foil) of the sealant layer, the third sealant layer 16c is the intermediate layer of the sealant layer, and the second sealant layer 16b is the innermost layer of the sealant layer. At least one layer selected from the group consisting of these three layers is the ionomer-containing layer, which includes the ionomer.

Examples and preferred modes of the materials forming the first sealant layer 16a of the solid-state battery packaging material 30 are similar to those of the first sealant layer 16a of the solid-state battery packaging material 20.

Examples and preferred modes of the materials forming the second and third sealant layers 16b and 16c of the solid-state battery packaging material 30 are similar to those of the second sealant layer 16b of the solid-state battery packaging material 20.

In the solid-state battery packaging material 30, the first sealant layer 16a may have a thickness, for example, in the range of 2 µm to 30 µm, 5 µm to 20 µm, or 8 µm to 10 µm, the second sealant layer 16b may have a thickness, for example, in the range of 10 µm to 80 µm, 13 µm to 40 µm, or 15 µm to 20 µm, and the third sealant layer 16c may have a thickness, for example, in the range of 2 µm to 30 µm, 5 µm to 20 µm, or 8 µm to 10 µm.

In the solid-state battery packaging material 30 as well, the thickness of the sealant layer 16 (the total thickness of the first, second, and third sealant layers 16a, 16b, and 16c) may be 30 µm or less from the perspective of reducing the thickness of the packaging material. With the solid-state battery packaging material of the present embodiment having such a thin configuration, decrease in the crack resistance after heat sealing and forming is inhibited, and the solid-state battery packaging material of the present embodiment detoxifies hydrogen sulfide and inhibits the corrosion of the current collectors.

When the sealant layer 16 includes a plurality of layers as in the solid-state battery packaging materials 20 and 30, the sealant layer 16 may include a layer that includes only the ionomer and a base resin composition layer that includes the base resin composition and no ionomer. When the sealant layer includes two layers as shown in Fig. 2, examples of the laminate of the first sealant layer 16a and the second sealant layer 16b include a laminate of the layer that includes only the ionomer/ the base resin composition layer and a laminate of the base resin composition layer/ the layer that includes only the ionomer. When the sealant layer includes three layers as shown in Fig. 3, examples of the laminate of the first sealant layer 16a, the third sealant layer 16c, and the second sealant layer 16b include a laminate of the layer that includes only the ionomer/ the base resin composition layer/ the layer that includes only the ionomer, and a laminate of the base resin composition layer/ the layer that includes only the ionomer/ the base resin composition layer. Of these laminates, from the perspective of achieving more reliable heat-sealing properties, the laminate with the base resin composition layer provided as the innermost layer, which is the second sealant layer 16b, is preferable. Additionally, from the perspective of further improving the heat-sealing properties, the layer that includes only the ionomer in the above-mentioned laminate may be changed to the mixed resin layer, and from the perspective of further promoting detoxification of hydrogen sulfide, the base resin composition layer of the above-mentioned laminate may be changed to the mixed resin layer.

Additionally, in the solid-state battery packaging materials 20 and 30 shown in Figs. 2 and 3, the second adhesive layer 17 may be located between the sealant layer 16 and the anticorrosion treatment layer 14 as shown in Fig. 1 from the perspective of improving the adhesion between the sealant layer 16 and the anticorrosion treatment layer 14.

### [Method of Producing Packaging Material]

Next, an example of a method of producing the packaging material 10 shown in Fig. 1 will be described. The method of producing the packaging material 10 should not be limited to the methods described below.

The method of producing the packaging material 10 of the present embodiment includes a step of laminating the anticorrosion treatment layer 14 on the barrier layer 13, a step of bonding the substrate layer 11 and the barrier layer 13, a step of further laminating the sealant layer 16 with the second adhesive layer 17 located therebetween, so that a laminate is prepared, and, if necessary, a step of aging the resultant laminate.

### (Step of laminating anticorrosion treatment layer 14 on barrier layer 13)

In the present step, the anticorrosion treatment layer 14 is formed on the barrier layer 13. As described above, examples of the method of forming the anticorrosion treatment layer 14 include applying a degreasing treatment, hydrothermal modification treatment, anodization treatment, or chemical conversion treatment to the barrier layer 13, and applying a coating agent having anticorrosion ability onto the barrier layer 13.

When the anticorrosion treatment layer 14 is a multilayer, for example, a coating liquid (coating agent) that serves as an underlying anticorrosion treatment layer (layer adjacent to barrier layer 13) may be applied to the barrier layer 13, followed by baking to form a first layer, and then, a coating liquid (coating agent) that serves as an overlying anticorrosion treatment layer may be applied to the first layer, followed by baking to form a second layer.

The degreasing treatment may be carried out by spraying or immersion. The hydrothermal modification treatment and the anodization treatment may be carried out by immersion. The chemical conversion treatment may be performed by appropriately selecting immersion, spraying, or coating depending on the type of chemical conversion treatment.

Various methods such as gravure coating, reverse coating, roll coating, or bar coating can be used as the method of applying the coating agent having anticorrosion ability.

As described above, the various treatments may be applied to either side or both sides of the metal foil. In the case of a single-side treatment, the treatment is preferably applied to the surface on which the second adhesive layer 17 is to be laminated. If needed, the treatment mentioned above may also be applied to the surface of the substrate layer 11.

The amounts of the coating agents for forming the first and second layers are preferably both in the range of 0.005 g/m² to 0.200 g/m², and more preferably 0.010 g/m² to 0.100 g/m².

If necessary, dry curing can be carried out within a base material temperature range of 60°C to 300°C depending on the drying conditions of the anticorrosion treatment layer 14 used.

### (Step of bonding substrate layer 11 and barrier layer 13)

In the present step, the barrier layer 13 provided with the anticorrosion treatment layer 14 is bonded to the substrate layer 11 with the first adhesive layer 12 located therebetween. The bonding method uses a technique such as dry lamination, non-solvent lamination, or wet lamination, and bonds the two layers using the material forming the aforementioned first adhesive layer 12. The first adhesive layer 12 is provided in the range of 1 g/m² to 10 g/m², and more preferably in the range of 3 g/m² to 7 g/m² in terms of dry coating amount.

### (Step of laminating second adhesive layer 17 and sealant layer 16)

In the present step, the sealant layer 16 is bonded to the side of the barrier layer 13 on which the anticorrosion treatment layer 14 is formed with the second adhesive layer 17 located between the anticorrosion treatment layer 14 and the sealant layer 16. Examples of the bonding method include wet processing and dry lamination.

With the wet processing, a solution or a dispersion of the adhesive forming the second adhesive layer 17 is applied onto the anticorrosion treatment layer 14, and the solvent is vaporized at a predetermined temperature (if the adhesive contains an acid-modified polyolefin resin, the temperature is not less than its melting point), followed by drying to thereby form a film, which may be further followed by baking, if necessary. Then, the sealant layer 16 is laminated, so that the packaging material 10 is prepared. Examples of the coating method include any of the various coating methods mentioned above.

### (Step of aging)

In the present step, the laminate is aged (cured). Aging of the laminate expedites the adhesion between the barrier layer 13 and the anticorrosion treatment layer 14, between the anticorrosion treatment layer 14 and the second adhesive layer 17, and between the second adhesive layer 17 and the sealant layer 16. Aging is conducted in the range of room temperature to 100°C. Aging time, for example, is 1 day to 10 days. To bond the second adhesive layer 17 with the sealant layer 16, heat treatment can be conducted at a temperature not less than the melting point of the second adhesive layer 17. Examples of the heat treatment include, but are not limited to, oven heating, sandwiching with heated rolls (thermal lamination), and winding on a heated roll.

In this manner, the packaging material 10 of the present embodiment as shown in Fig. 1 is produced.

Next, an example of a method of producing the packaging material 20 shown in Fig. 2 will be described. The method of producing the packaging material 20 should not be limited to the methods described below.

The method of producing the packaging material 20 of the present embodiment includes a step of laminating the anticorrosion treatment layer 14 on the barrier layer 13, a step of bonding the substrate layer 11 and the barrier layer 13, a step of further laminating the first sealant layer 16a and the second sealant layer 16b, so that a laminate is prepared, and, if necessary, a step of heating the resultant laminate. Steps up to the step of bonding the substrate layer 11 and the barrier layer 13 can be performed in the same manner as in the method of producing the packaging material 10.

### (Step of laminating first sealant layer 16a and second sealant layer 16b)

In the present step, the first sealant layer 16a and the second sealant layer 16b are formed on the anticorrosion treatment layer 14 formed in the previous step. An example of the method includes sandwich-laminating the first sealant layer 16a and the second sealant layer 16b using an extrusion laminator. Lamination can be conducted by a tandem lamination method or a co-extrusion method where the first sealant layer 16a and the second sealant layer 16b are extruded. The resin composition for forming the first sealant layer 16a and the resin composition for forming the second sealant layer 16b are prepared by formulating individual components, for example, so as to meet the configurations of the first and second sealant layers 16a and 16b described above.

As shown in Fig. 2, through the present step, a laminate is obtained in which the substrate layer 11, the first adhesive layer 12, the barrier layer 13, the anticorrosion treatment layer 14, the first sealant layer 16a, and the second sealant layer 16b are laminated in this order.

In laminating the first sealant layer 16a, materials that are dry-blended so as to have the composition of the material formulation mentioned above may be directly laminated using an extrusion laminator, or granules of the first sealant layer 16a obtained in advance by melt-blending materials using a melt kneader such as a single-screw extruder, twin-screw extruder, or Brabender mixer may be laminated using an extrusion laminator.

In laminating the second sealant layer 16b, materials that are dry-blended so as to have the composition of the material formulation mentioned above as a resin composition for forming a sealant layer may be directly laminated using an extrusion laminator, or granules obtained in advance by melt-blending materials using a melt kneading apparatus such as a single-screw extruder, twin-screw extruder, or Brabender mixer may be laminated using an extrusion laminator by a tandem lamination method or coextrusion method of extruding the first and second sealant layers 16a and 16b. Moreover, a sealant monolayer film may be formed in advance as a cast film using a resin composition for forming a sealant layer, and the film may be laminated by sandwich-lamination together with an adhesive resin, or may be laminated by dry lamination method using an adhesive.

### (Step of heating)

In the present step, the laminate is heat-treated. Heat treatment of the laminate improves the adhesion between the barrier layer 13 and the anticorrosion treatment layer 14, between the anticorrosion treatment layer 14 and the first sealant layer 16a, and between the first sealant layer 16a and the second sealant layer 16b. The heating method preferably includes treatment at least at a temperature of not less than the melting point of the first sealant layer 16a.

In this manner, the packaging material 20 of the present embodiment as shown in Fig. 2 is produced.

Next, an example of the method of producing the packaging material 30 shown in Fig. 3 will be described. The method of producing the packaging material 30 should not be limited to the methods described below.

The method of producing the packaging material 30 of the present embodiment includes a step of laminating the anticorrosion treatment layer 14 on the barrier layer 13, a step of bonding the substrate layer 11 and the barrier layer 13, a step of further laminating the first sealant layer 16a, the third sealant layer 16c, and the second sealant layer 16b, so that a laminate is prepared, and, if necessary, a step of heating the resultant laminate.

### (Step of laminating first sealant layer 16a, third sealant layer 16c, and second sealant layer 16b)

In the present step, the first sealant layer 16a, the third sealant layer 16c, and the second sealant layer 16b are formed on the anticorrosion treatment layer 14. Examples of the method include a tandem lamination method and a coextrusion method of extruding the first sealant layer 16a, the third sealant layer 16c, and the second sealant layer 16b using an extrusion laminator. In this case, materials that are dry-blended so as to have a composition of the material formulation mentioned above as a resin composition for forming a sealant layer may be directly laminated using an extrusion laminator, or granules obtained in advance by melt-blending materials using a melt kneading apparatus such as a single-screw extruder, twin-screw extruder, or Brabender mixer may be laminated using an extrusion laminator by a tandem lamination method or coextrusion method of extruding the first, third, and second sealant layers 16a, 16c, and 16b.

Films of the third and second sealant layers 16c and 16b may be formed by coextrusion and these films may be sandwich-laminated together with a resin composition for forming the first sealant layer 16a.

In this manner, the packaging material 30 of the present embodiment as shown in Fig. 3 is produced.

Preferred embodiments of the solid-state battery packaging material of the present disclosure have been described above in detail. The present disclosure should not be construed as limited to such specific embodiments and many variations and alterations may be possible within the spirit of the present disclosure recited in claims. For example, in producing a solid-state battery packaging material not having the first adhesive layer 12, a resin material capable of forming the substrate layer 11 as described above may be applied onto the barrier layer 13 to form the substrate layer 11.

### [Solid-State Battery]

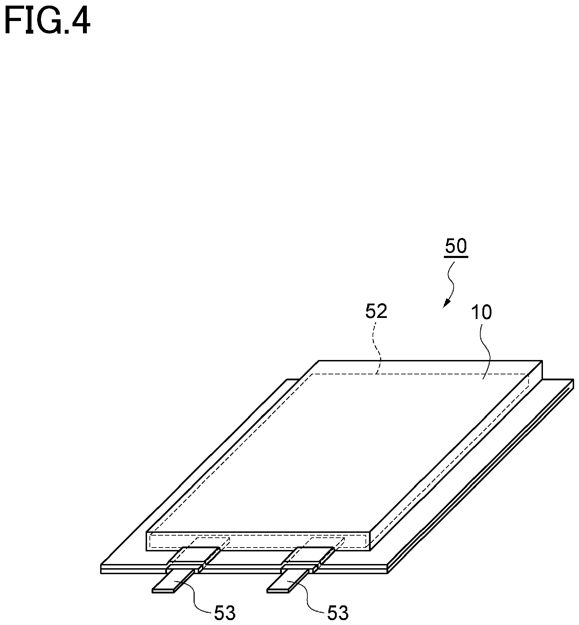

Fig. 4 is a perspective view of the solid-state battery according to one embodiment prepared using the packaging material described above. As shown in Fig. 4, a solid-state battery 50 is constituted by a battery element 52, two metal terminals (current output terminals) 53 for outputting current from the battery element 52, and the packaging material 10, which hermetically encompasses the battery element 52. The packaging material 10 is the above-described packaging material 10 according to the present embodiment. The outermost layer of the packaging material 10 is the substrate layer 11, and the innermost layer of the packaging material 10 is the sealant layer 16. That is, one laminate film is folded in half and heat-sealed, or two laminate films are placed on one another and heat-sealed in such a manner that the substrate layer 11 is located on the outer side of the solid-state battery 50, and the sealant layer 16 is located on the inner side of the solid-state battery 50. This forms the packaging material 10 that encompasses the battery element 52. The solid-state battery 50 may use the packaging material 20 or the packaging material 30 instead of the packaging material 10.

The battery element 52 includes a sulfide-based solid electrolyte between the positive electrode and the negative electrode. The metal terminals 53 are current collectors, parts of which project from the packaging material 10 and are made of metal foil such as copper foil or aluminum foil. Even if hydrogen sulfide is generated from the battery element 52, the packaging material 10 detoxifies the hydrogen sulfide. The detoxification of hydrogen sulfide inhibits corrosion of the metal terminals (current collectors) 53 in the packaging material 10 and external leakage of hydrogen sulfide even if the packaging material 10 is damaged. Thus, the solid-state battery 50 of the present embodiment achieves excellent safety.

### Examples

In the following description, the present disclosure will be described in more detail by way of examples. However, the present disclosure should not be limited to the following examples.

### [Materials Used]

Materials used in examples and comparative examples are shown below.

### <Substrate layer (15 µm thickness)>

Nylon (Ny) film (manufactured by Toyobo Co., Ltd.) was used.

### <First adhesive layer (4 µm thickness)>

A polyurethane-based adhesive (manufactured by Toyo Ink Co., Ltd.) was used, containing a polyester polyol-based main resin to which a tolylene diisocyanate adduct curing agent was added.

### <First anticorrosion treatment layer (located facing toward substrate layer) and second anticorrosion treatment layer (located facing toward sealant layer)>

(CL-1): A Sodium polyphosphate stabilized cerium oxide sol was used after being adjusted to a solid content concentration of 10 mass% by using distilled water as a solvent. It should be noted that the sodium polyphosphate stabilized cerium oxide sol was obtained by formulating 10 parts by mass of Na salt of phosphoric acid per 100 parts by mass of cerium oxide.

(CL-2): A composition comprising 90 mass% of polyallylamine (manufactured by Nitto Boseki Co., Ltd) and 10 mass% of polyglycerol polyglycidyl ether (manufactured by Nagase ChemteX Corp.) was used after being adjusted to a solid content concentration of 5 mass% using distilled water as a solvent.

### <Barrier layer (35 µm thickness)>

Annealed and degreased soft aluminum foil (8079 Material manufactured by Toyo Aluminum K.K.) was used.

### <Second adhesive layer (3 µm thickness)>

The following adhesives a and b were prepared as adhesives for forming the second adhesive layer.

(Adhesive a): An adhesive obtained by formulating 10 parts by mass (solid content ratio) of a polyisocyanate compound having an isocyanurate structure per 100 parts by mass of an acid-modified polyolefin resin dissolved in toluene.

(Adhesive b): A polyurethane-based adhesive prepared by formulating a polyester polyol comprising a hydrogenated dimer fatty acid and a diol, and a polyisocyanate at a molar ratio (NCO/OH) of 2.

### <Sealant layer>

### [Resin Composition for Forming Sealant Layer]

As the constituent material of the resin composition for forming the sealant layer, the following base resin, miscible elastomer, ionomer, LDPE, and compatibilizers a and b were prepared. These materials were formulated by the mass ratio shown in Table 1 to form the resin composition for forming the sealant layer.

### Base resin: Propylene-ethylene random copolymer (random PP)

Miscible elastomer: Propylene-butene-1-random copolymer elastomer (propylene-butene-1) that is miscible with base resin.

Ionomer: Ionomer resin in which molecules of ethylene-a, β unsaturated carboxylic acid copolymer are cross-linked with zinc ions.

LDPE: Low-density polyethylene (LC600A manufactured by Japan Polyethylene Corporation) Compatibilizer a: Block copolymer including propylene unit and ethylene unit

Compatibilizer b: Block copolymer including crystalline ethylene unit and ethylene-butylene unit

### [Examples 1 to 13 and Comparative Examples 1 to 3]

First, the first and second anticorrosion treatment layers were provided on the barrier layer by the following procedure. That is, (CL-1) was applied to both surfaces of the barrier layer by micro gravure coating at a dry coating weight of 70 mg/m², followed by baking at 200°C in a drying unit. Next, (CL-2) was applied to the obtained layer by micro gravure coating at a dry coating weight of 20 mg/m², thereby forming a composite layer of (CL-1) and (CL-2) as first and second anticorrosion treatment layers. The composite layer developed anticorrosion ability by compounding two materials (CL-1) and (CL-2).

Next, the barrier layer provided with the first and second anticorrosion treatment layers was dry-laminated to a substrate layer with the first anticorrosion treatment layer facing the substrate layer using a polyurethane-based adhesive (first adhesive layer). Subsequently, the barrier layer provided with the first and second anticorrosion treatment layers was dry-laminated to a sealant layer (30 µm thickness) prepared as a cast film in advance with the second anticorrosion treatment layer facing the sealant layer using the adhesive a or b (second adhesive layer) shown in Table 1. The resin composition for forming the sealant layer having the composition shown in Table 1 was used for forming a film of the sealant layer.

The laminate obtained in this way was aged at 40°C for 4 days to produce a packaging material of Example 7 (a laminate of the substrate layer, the first adhesive layer, the first anticorrosion treatment layer, the barrier layer, the second anticorrosion treatment layer, the second adhesive layer, and the sealant layer).

### [Example 14]

The first and second anticorrosion treatment layers were provided on the barrier layer in the same manner as in Example 1. The barrier layer provided with the first and second anticorrosion treatment layers was dry-laminated to a substrate layer with the first anticorrosion treatment layer facing the substrate layer using a polyurethane-based adhesive (first adhesive layer). This was set in an unwinding unit of an extrusion laminator, followed by coextrusion of the material of the sealant layer on the second anticorrosion treatment layer under processing conditions of 290°C and 100 m/minute to laminate a sealant layer (30 µm thickness). Note that, for the sealant layer, the compounds of the various materials were prepared in advance using a twin-screw extruder, followed by water cooling and pelletization steps, so as to be used for the extrusion lamination mentioned above. The resin composition for forming the sealant layer having the composition shown in Table 1 was used for forming the sealant layer.

The laminate obtained in this way was heat-treated so that the maximum temperature reached of the laminate would be 190°C to produce a packaging material of Example 14 (a laminate of the substrate layer, the first adhesive layer, the first anticorrosion treatment layer, the barrier layer, the second anticorrosion treatment layer, and the sealant layer).

### [Example 15]

The first and second anticorrosion treatment layers were provided on the barrier layer in the same manner as in Example 1. The barrier layer provided with the first and second anticorrosion treatment layers was dry-laminated to a substrate layer with the first anticorrosion treatment layer facing the substrate layer using a polyurethane-based adhesive (first adhesive layer). Next, the barrier layer provided with the first and second anticorrosion treatment layers was dry-laminated to a sealant layer (30 µm thickness) prepared as a cast film in advance with the second anticorrosion treatment layer facing the sealant layer using the adhesive a (second adhesive layer). The sealant layer was formed as a laminated film including a layer located facing toward the metal foil (hereinafter, also referred to as a layer located facing toward the aluminum foil) (15 µm thickness) and an innermost layer (15 µm thickness) by coextruding two kinds of resin composition for forming the sealant layer having the composition shown in Table 2.

### [Example 16]

The first and second anticorrosion treatment layers were provided on the barrier layer in the same manner as in Example 1. The barrier layer provided with the first and second anticorrosion treatment layers was dry-laminated to a substrate layer with the first anticorrosion treatment layer facing the substrate layer using a polyurethane-based adhesive (first adhesive layer). This was set in an unwinding unit of an extrusion laminator, followed by coextrusion of the material of the sealant layer on the second anticorrosion treatment layer under processing conditions of 290°C and 100 m/min to laminate, as a sealant layer, a layer located facing toward the metal foil (hereinafter also referred to as a layer located facing toward the aluminum foil) (15 µm thickness) and an innermost layer (15 µm thickness) in this order. Note that, for the layer located facing toward the aluminum foil and the innermost layer, compounds of various materials were prepared in advance using a twin-screw extruder, followed by water cooling and pelletizing steps, so as to be used for the extrusion lamination mentioned above. In forming the layer located facing toward the aluminum foil and the innermost layer, the resin compositions for forming the sealant layer having the compositions shown in Table 2 were used.

The laminate obtained in this way was heat-treated so that the maximum temperature reached of the laminate would be 190°C to prepare a packaging material of Example 16 (a laminate of the substrate layer, the first adhesive layer, the first anticorrosion treatment layer, the barrier layer, the second anticorrosion treatment layer, the sealant layer (the layer located facing toward the aluminum foil), and the sealant layer (the innermost layer)).

**[Table 1]**

| | Second adhesive layer | Resin composition for forming sealant layer (parts by mass) | | | | | |
|---|---|---|---|---|---|---|---|
| | Kind | Base resin | Miscible elastomer | Ionomer | LDPE | Compatibilizer a | Compatibilizer b |
| Example 1 | Adhesive a | 70 | 20 | 10 | - | - | - |
| Example 2 | Adhesive a | 70 | 20 | 20 | - | - | - |
| Example 3 | Adhesive a | 70 | 20 | 40 | - | - | - |
| Example 4 | Adhesive a | 70 | 20 | 60 | - | - | - |
| Example 5 | Adhesive a | 70 | 20 | 10 | - | 10 | - |
| Example 6 | Adhesive a | 70 | 20 | 60 | - | 10 | - |
| Example 7 | Adhesive b | 70 | 20 | 10 | - | 10 | - |
| Example 8 | Adhesive b | 70 | 20 | 60 | - | 10 | - |
| Example 9 | Adhesive a | 70 | 20 | 10 | - | - | 10 |
| Example 10 | Adhesive a | 70 | 20 | 60 | - | - | 10 |
| Example 11 | Adhesive b | 70 | 20 | 10 | - | - | 10 |
| Example 12 | Adhesive b | 70 | 20 | 60 | - | - | 10 |
| Example 13 | Adhesive a | - | - | 100 | - | - | - |
| Example 14 | - | - | - | 100 | - | - | - |
| Comparative Example 1 | Adhesive a | 70 | 20 | - | - | - | - |
| Comparative Example 2 | Adhesive a | 70 | 20 | - | 10 | - | - |
| Comparative Example 3 | Adhesive a | 70 | 20 | - | 10 | 10 | - |

**[Table 2]**

| | Second adhesive layer | Resin composition for forming sealant layer (parts by mass) | | | | | |
|---|---|---|---|---|---|---|---|
| | | Layer located facing toward aluminum foil | | | Innermost layer | | |
| | Kind | Base resin | Miscible elastomer | Ionomer | Base resin | Miscible elastomer | Ionomer |
| Example 15 | Adhesive a | 70 | 20 | - | - | - | 100 |
| Example 16 | - | - | - | 100 | 70 | 20 | - |

### <Evaluation>

The following evaluation tests were conducted on the packaging materials obtained in the examples and the comparative examples.

### (Heat-sealing strength)

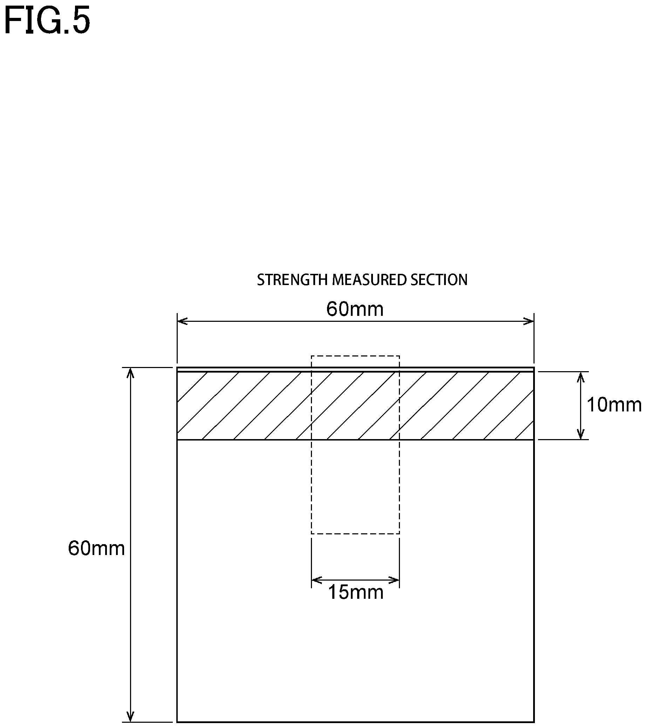

A sample of the packaging material cut to 60 mm × 120 mm was folded in half and heat-sealed on one side with a seal bar having a width of 10 mm at 190°C and at 0.5 MPa for 3 seconds. After the heat-sealed packaging material was stored at room temperature (25°C) for 24 hours, the heat-sealed section was cut into a strip of 15 mm in width (see Fig. 5), and the sealing strength (T-peel strength) was measured using a testing machine (manufactured by Instron). The test was conducted in accordance with Japanese Industrial Standard (JIS) K6854 at 23°C and in a 50% RH atmosphere at a peeling rate of 50 mm/min. Table 3 shows the measurement results. The sealing strength of 30 N/15 mm or more passes the test.

### (Corrosion evaluation)

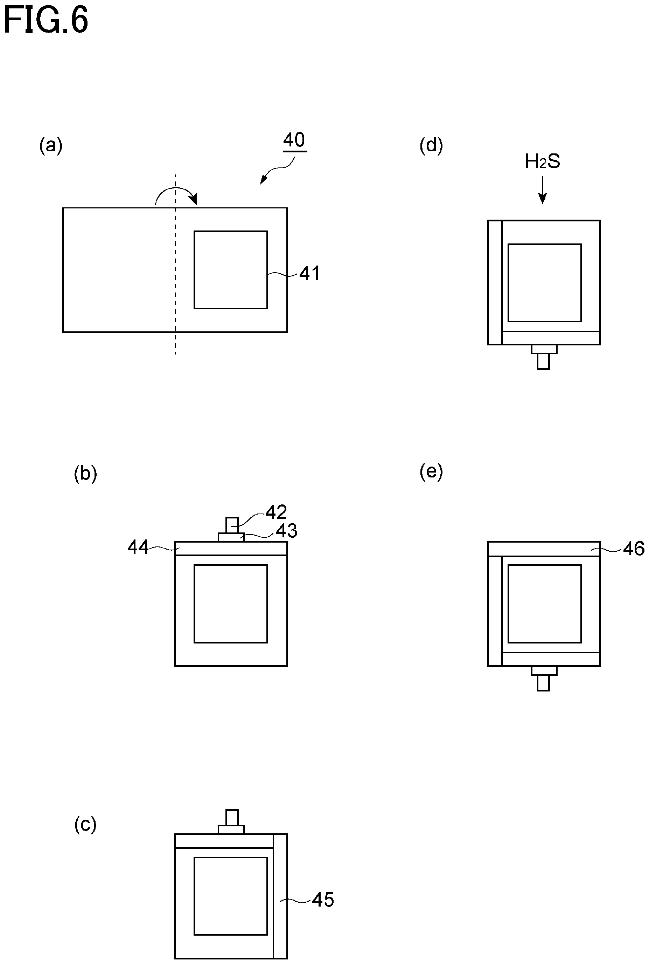

A sample 40 was prepared by cutting the packaging material to 120 mm × 200 mm and loaded on a cold forming die so that the sealant layer was in contact with the protrusion of the forming machine. Then, the sample 40 was deep-drawn to 2.0 mm at a forming rate of 15 mm/sec to form a deep-drawn portion 41. Then, the sample 40 was folded in half to 120 mm × 100 mm (see Fig. 6 (a)). The die had a forming area of 80 mm × 70 mm (square tube type) and a punch corner radius (RCP) of 1.0 mm. Next, 100 mm upper edge portions 44, with a copper foil tab 42 and a tab sealant 43 sandwiched therebetween, were heat-sealed (see Fig. 6 (b)). Then, 120 mm side edge portions 45 were heat-sealed to form a pouch (see Fig. 6 (c)). After that, 5 ml hydrogen sulfide gas at 1 ppm by mass was poured in the pouch from the remaining edge that has not been heat-sealed (see Fig. 6(d)), and 100 mm lower edge portions 46 were heat-sealed (see Fig. 6(e)). The pouch was then stored in a thermostatic bath at 40°C for one month, and the corrosion state of the copper foil tab 42 in the opened pouch was visually checked. If the copper foil tab 42 had any of color change, unevenness, rust, and dendrites, it was judged as B (corrosion found), and if none of the above occurred, it was judged as A (no corrosion). The results are shown in Table 3.

**[Table 3]**

| | Sealing strength (N/15 mm) | Copper foil corrosion |
|---|---|---|
| Example 1 | 40 | A |
| Example 2 | 39 | A |
| Example 3 | 35 | A |
| Example 4 | 33 | A |
| Example 5 | 45 | A |
| Example 6 | 41 | A |
| Example 7 | 44 | A |
| Example 8 | 41 | A |
| Example 9 | 43 | A |
| Example 10 | 40 | A |
| Example 11 | 42 | A |
| Example 12 | 40 | A |
| Example 13 | 31 | A |
| Example 14 | 30 | A |
| Example 15 | 30 | A |
| Example 16 | 32 | A |
| Comparative Example 1 | 42 | B |
| Comparative Example 2 | 32 | B |
| Comparative Example 3 | 40 | B |

### [Reference Signs List]

- 10, 20, 30: Solid-state battery packaging material
- 11: Substrate layer
- 12: First adhesive layer
- 13: Barrier layer
- 14: Anticorrosion treatment layer
- 16: Sealant layer
- 16a: First sealant layer
- 16b: Second sealant layer
- 16c: Third sealant layer
- 17: Second adhesive layer
- 40: Sample
- 41: Deep-drawn portion
- 42: Copper foil tab
- 43: Tab sealant
- 44: Upper edge portion
- 45: Side edge portion
- 46: Lower edge portion
- 50: Solid-state battery
- 52: Battery element
- 53: Metal terminal

## Claims

1. A packaging material for a solid-state battery including a sulfide-based solid electrolyte, the packaging material comprising at least a substrate layer, a barrier layer, and a sealant layer in this order, wherein
the sealant layer includes an ionomer.

2. The packaging material according to claim 1, wherein the ionomer includes an ethylene-based ionomer resin.

3. The packaging material according to claim 1 or 2, wherein the ionomer includes a metal ion, and the metal ion includes a zinc ion.

4. The packaging material according to any one of claims 1 to 3, wherein the sealant layer includes a mixed resin layer, the mixed resin layer including a polypropylene-based resin and, as the ionomer, an ethylene-based ionomer resin that is immiscible with the polypropylene-based resin.

5. The packaging material according to claim 4, wherein the mixed resin layer further includes a compatibilizer that includes a part miscible with the polypropylene-based resin and a part miscible with the ethylene-based ionomer resin.

6. The packaging material according to claim 4 or 5, wherein the content of the ionomer in the mixed resin layer is 1 mass% to 40 mass% relative to a total solid content of the mixed resin layer.

7. The packaging material according to any one of claims 1 to 6, wherein the sealant layer includes a plurality of layers, at least one of the layers including the ionomer, at least one other layer of the layers including the polypropylene-based resin.

8. The packaging material according to any one of claims 1 to 7, wherein one or both sides of the barrier layer are provided with an anticorrosion treatment layer.

9. The packaging material according to claim 8, wherein the anticorrosion treatment layer includes cerium oxide, 1 to 100 parts by mass of phosphoric acid or phosphate relative to 100 parts by mass of the cerium oxide, and a cationic polymer.

10. A solid-state battery comprising:
a battery element including a sulfide-based solid electrolyte;
a current output terminal extending from the battery element; and
the packaging material according to any one of claims 1 to 9, which sandwiches the current output terminal and accommodates the battery element.
